# FASCICULE DE BREVET EUROPEEN

(11) **EP 1 458 212 B1**
(45) Date de publication et mention de la délivrance du brevet: **29.12.2010**
(21) Numéro de dépôt: 04290564.6
(22) Date de dépôt: 02.03.2004
(51) Int. Cl.: H04W 88/14

(54) **Systeme d'interconnexion de plusieurs operateurs à un même reseau d'accès**
System zur Verbindung von mehreren Betreibern zum gleichen Zugangsnetzwerk
System for interconnecting several operators to the same access network

(30) Priorité: 06.03.2003 FR 0302775
(43) Date de publication de la demande: 15.09.2004
(73) Titulaire: FRANCE TELECOM, 75015 Paris (FR)
(72) Inventeur: Joga, Sébastien, 92240 Malakoff (FR); Chichmanian, Anouch, 92130 Issy les Moulineaux (FR)
(74) Mandataire: Santarelli

(56) Documents cités:
- WO-A-01/15470
- WO-A-99/20067
- WO-A-99/66742
- WO-A-02/073993
- ETSI: "Digital cellular telecommunications system (Phase 2+) (GSM); Universal Mobile Telecommunications System (UMTS); Intra-domain connection of Radio Access Network (RAN) nodes to multiple Core Network (CN) nodes (3GPP TS 23.228 version 5.2.0 Release 5)" ETSI TS 123 236, mars 2002 (2002-03), pages 1-36, XP002261414 France

## Description

Le domaine de l'invention est celui des réseaux de télécommunication cellulaire. On distingue généralement dans un réseau de télécommunication cellulaire, un réseau d'accès et un réseau coeur, gérés par un opérateur de télécommunication. Le réseau d'accès permet à des mobiles d'émettre et de recevoir des messages sur des fréquences radio en fonction de zones géographiques dans l'une desquelles chaque mobile abonné auprès de l'opérateur, est situé à un moment donné. Le réseau coeur permet d'établir des connexions de mobile avec un autre mobile ou un équipement terminal de traitement fixe en faisant passer si besoin est, cette connexion par d'autres réseaux.

L'interconnexion de plusieurs opérateurs à un même réseau d'accès permet de faire bénéficier de ce réseau d'accès à ces opérateurs, améliorant les conditions économiques liées aux coûts d'infrastructures et les conditions environnementales liées à une prolifération parfois non souhaitable d'antennes radio. Un opérateur qui n'a pas de licence pour exploiter des bandes de fréquences radio, est nommé opérateur virtuel (MVNO en abrégé pour Mobile Virtual Network Operator en anglais) vis à vis d'un opérateur hôte (MNO en abrégé pour Mobile Network Operator en anglais) qui lui, possède une licence pour exploiter un réseau d'accès.

Un opérateur disposant d'un réseau d'accès pourra augmenter la rentabilité de son réseau d'accès s'il en offre les services à un autre opérateur qui ne dispose pas de réseau d'accès équivalent.

Dans l'état de la technique antérieure pour interconnecter plusieurs opérateurs à un même réseau d'accès, on connaît les solutions qui consistent à interconnecter le réseau coeur d'un deuxième opérateur au réseau coeur d'un premier opérateur qui en tant qu'opérateur hôte, dispose d'un réseau d'accès. Le réseau coeur du deuxième opérateur est vu par le réseau coeur du premier opérateur sensiblement au même titre que tout autre réseau avec lequel le réseau coeur du premier opérateur, est amené à établir des connexions. On interconnecte généralement les noeuds du réseau coeur du deuxième opérateur, alors opérateur virtuel avec des noeuds de réseau coeur de l'opérateur hôte.

Une telle interconnexion dans le réseau coeur, présente de nombreux inconvénients. L'hébergement de l'opérateur virtuel impacte le réseau coeur de l'opérateur hôte par la nécessité d'adapter les configurations de chaque opérateur au fur et à mesure des évolutions (extension des domaines d'adressage IP, modification des protocoles dans les réseaux). La traversée de noeud de transit, induit des délais additionnels sur les transmissions de paquets. Les services de réseaux intelligents pour l'opérateur virtuel, sont plus difficiles à mettre en oeuvre. Le routage dans le réseau coeur à destination de l'international, n'est pas souple pour l'opérateur virtuel. L'opérateur virtuel n'a pas de maîtrise de la qualité de service (QoS) dans le réseau d'accès.

On connaît aussi d'autres solutions qui consistent à séparer chaque élément du réseau d'accès, stations de bases, contrôleurs de stations de station de base en deux parties logiques distinctes, chacune attribuée à un opérateur avec des fréquences et des cellules spécifiques. Le document WO 02/073993 décrit ainsi un procédé de communication radio dans un réseau radio cellulaire consistant à relier deux réseaux coeur à un réseau d'accès radio et à partager un élément d'un réseau d'accès radio entre les deux réseaux coeur. Le partage du réseau d'accès radio est basé dans ce document sur l'utilisation de fréquences distinctes pour chacun des opérateurs. Ces solutions présentent des inconvénients de lourdeur, d'encombrement et de manque de souplesse. Par exemple les fréquences pour lesquelles un opérateur a une licence, ne peuvent être utilisées par l'autre opérateur. Il existe en quelque sorte deux réseaux d'accès voisins mais disjoints dont l'indépendance ne permet qu'une moindre symbiose entre les opérateurs.

Un objectif de l'invention est de pouvoir interconnecter plusieurs opérateurs à un même réseau d'accès de meilleure façon que celles de la technique antérieure.

Un premier objet de l'invention est un procédé de production d'un réseau de télécommunication cellulaire permettant à un opérateur dit virtuel qui ne possède pas de réseau d'accès radio, d'utiliser un réseau d'accès radio géré par un opérateur dit hôte, ledit réseau d'accès radio comprenant des contrôleurs de réseau d'accès reliés à au moins un noeud de réseau coeur de l'opérateur hôte.

Le procédé est remarquable en ce qu'il comprend:
- une étape de construction dans laquelle on déploie des batteries de noeuds de réseau coeur en plaçant dans chaque batterie, au moins un noeud de réseau coeur de l'opérateur hôte avec au moins un noeud de réseau coeur de l'opérateur virtuel, en associant un ou plusieurs contrôleurs de réseau d'accès à chaque batterie et en reliant les contrôleurs de réseau d'accès à tous les noeuds de réseau coeur de la batterie à laquelle ils sont associés;
- une étape de configuration dans laquelle on configure chaque contrôleur de réseau d'accès relié aux noeuds de coeurs de réseau d'une même batterie de façon à aiguiller des messages reçus d'un mobile de communication sur une fréquence de l'opérateur hôte, soit vers un noeud de réseau coeur de l'opérateur hôte, soit vers un noeud de réseau coeur de l'opérateur virtuel, en fonction d'une valeur que le mobile émet vers le réseau d'accès pour s'identifier, ladite valeur étant distinctive pour l'opérateur hôte et pour l'opérateur virtuel.

L'interconnexion procurée par les liaisons des contrôleurs avec les noeuds de réseau coeur des deux opérateurs dans chaque batterie de noeuds de réseau coeur, évite de devoir établir des connexions entre les noeuds de réseau coeur de l'opérateur virtuel et les noeuds de réseau coeur de l'opérateur hôte. L'ensemble des fréquences de transmission radio, disponibles au niveau du contrôleur de réseau d'accès, pourront être utilisées pour l'ensemble dé la batterie de noeuds de réseau coeur car la distinction entre opérateurs ne se fait pas sur les fréquences utilisées par le mobile mais sur une valeur distinctive émise par le mobile.

Pour s'identifier, le mobile peut émettre de différentes manières une valeur vers le réseau d'accès. La valeur peut être basée sur une identité permanente et émise par exemple d'une première manière dans une entête qui précède un corps de message à destination d'un réseau coeur, d'une deuxième manière dans un corps de message à destination du réseau coeur, d'une troisième manière dans un message à destination du réseau d'accès. La valeur peut être basée aussi sur une identité temporaire allouée par le réseau coeur de manières comparables.

Particulièrement pour tirer bénéfice de la première manière, une première plage de valeurs est réservée à l'opérateur hôte de façon à couvrir une image d'identité permanente lorsque le mobile est abonné auprès de l'opérateur hôte et une deuxième plage de valeurs est réservée à l'opérateur virtuel de façon à couvrir l'image d'identité permanente lorsque le mobile est abonné auprès de l'opérateur virtuel.

Ceci permet à une valeur qui est une image d'identité permanente émise par le mobile pour s'identifier, d'être distinctive par la plage de valeurs.

Ainsi, lorsqu'un mobile ne dispose que de son identité d'abonné permanente pour se faire reconnaître par le réseau, les plages de valeurs distinctes pour chaque opérateur, permettent au contrôleur de réseau d'accès de reconnaître celui des opérateurs auprès duquel le mobile est abonné pour déterminer le noeud de batterie de noeuds de réseau coeur qui convient, indépendamment de la fréquence utilisée par le mobile pour émettre son message. Cette image peut être constituée par tout ou partie des bits de l'IMSI ou de toute autre manière telle que par une fonction plus élaborée.

Particulièrement pour tirer bénéfice de la deuxième manière, dans l'étape de configuration, on configure chaque contrôleur de réseau d'accès de façon à prendre comme valeur distinctive, la valeur d'un champ d'une identité permanente qui est extraite d'un message envoyé par le mobile à destination du réseau coeur auprès duquel le mobile est abonné.

Particulièrement pour tirer bénéfice de la troisième manière, dans l'étape de configuration, on configure chaque contrôleur de réseau d'accès de façon à mémoriser une correspondance entre d'une part, un identifiant local attribué par le contrôleur de réseau d'accès au mobile pour établir une connexion radio entre le mobile et ledit contrôleur, et d'autre part une identité permanente émise par le mobile à destination du dit contrôleur pour établir ladite connexion radio, et de façon à prendre comme valeur distinctive, la valeur d'un champ de l'identité permanente qui correspond à l'identifiant local pour un message émis par le mobile sur ladite connexion radio, à destination du réseau coeur auprès duquel le mobile est abonné.

Particulièrement aussi, dans l'étape de construction, on attribue à chaque noeud de réseau coeur dans chaque batterie, un identificateur de ressource distinctif de l'opérateur hôte et de l'opérateur virtuel et dans l'étape de configuration, on configure chaque noeud de réseau coeur dans chaque batterie de façon à ce que toute identité temporaire attribuée et envoyée par ce noeud à un mobile de communication, comprenne l'identificateur de ressource de sorte que lorsque la valeur émise par le mobile de communication pour s'identifier, est une image de l'identité temporaire, cette valeur comprenant l'identificateur de ressource, est distinctive pour l'opérateur hôte et pour l'opérateur virtuel.

Ainsi, lorsqu'un mobile dispose d'une identité temporaire spécialement allouée pour se faire reconnaître par le réseau, les identificateurs de ressources, permettent directement au contrôleur de réseau d'accès de déterminer le noeud de la batterie de noeuds de réseau coeur qui convient, indépendamment de la fréquence utilisée par le mobile pour émettre son message.

Avantageusement, chaque batterie de noeuds de réseau coeur mis en oeuvre dans le procédé, comprend deux noeuds de réseau coeur et l'identificateur de ressource est un bit de premier état pour l'opérateur hôte et de deuxième état pour l'opérateur virtuel.

Ceci permet une simplification du réseau de télécommunication cellulaire, produit par le procédé.

Un deuxième objet de l'invention est un réseau de télécommunication cellulaire comprenant un premier réseau coeur géré par un premier opérateur et qui comprend des noeuds de réseau coeur, organisés par batteries de noeuds de réseau coeur et un réseau d'accès radio qui comprend des contrôleurs de réseau d'accès, chacun relié à une ou plusieurs batteries.

Le réseau de télécommunication est remarquable en ce qu'il comprend un deuxième réseau coeur géré par un deuxième opérateur et qui comprend des noeuds de réseau coeur, répartis dans les batteries de façon à ce que les contrôleurs de réseau d'accès soient reliés à au moins un noeud du deuxième réseau coeur, les contrôleurs de réseau d'accès étant agencés pour aiguiller vers un noeud du premier ou du deuxième réseau coeur, un message émis par un mobile de communication pour s'identifier, en fonction d'une valeur reçue du mobile de communication par le contrôleur dans ledit message, ladite valeur étant distinctive du premier et du deuxième opérateur.

Lorsque le premier opérateur est un opérateur hôte qui gère le réseau d'accès et que le deuxième opérateur est un opérateur virtuel, le réseau de télécommunication est de type de ceux produits par le procédé en premier objet de l'invention. Les deux opérateurs peuvent aussi jouer un rôle symétrique, par exemple en partageant les réseaux d'accès qu'ils gèrent pour former un réseau d'accès plus étendu, un opérateur étant hôte pour une partie de réseau d'accès qu'il gère et virtuel pour une partie de réseau d'accès gérée par l'autre opérateur. Les opérateurs qui gèrent chacun un réseau coeur peuvent tous être virtuel, le réseau d'accès étant géré par un opérateur tiers.

Particulièrement, dans le réseau de télécommunication, la valeur est distinctive par son appartenance à une première plage de valeurs réservée au premier opérateur, ou à une deuxième plage de valeur réservée au deuxième opérateur.

Particulièrement aussi dans le réseau de télécommunication, le contrôleur de réseau d'accès comprend des moyens pour extraire une identité permanente de mobile, à l'intérieur d'un message émis par le mobile à destination d'un réseau coeur et des moyens pour prendre comme valeur distinctive, celle contenue dans un champ de l'identité permanente qui identifie celui des opérateurs auprès duquel le mobile est abonné.

Particulièrement aussi dans le réseau de télécommunication, le contrôleur de réseau d'accès comprend une table de correspondance entre un identifiant local de connexion radio avec un mobile et une identité permanente de ce mobile dont un champ identifiant celui des opérateurs auprès duquel le mobile est abonné, donne ladite valeur distinctive.

Particulièrement encore lorsque la valeur est basée sur une identité temporaire attribuée par le réseau coeur, la valeur est distinctive par son contenu d'un identificateur de ressource qui distingue, dans chaque batterie, les noeuds selon qu'ils sont du premier ou du deuxième réseau coeur.

Dans le réseau de télécommunication, chaque noeud du premier réseau coeur organisé par batterie de noeuds de réseau coeur, respectivement chaque noeud du deuxième réseau coeur réparti dans une batterie de noeuds de réseau coeur, est alors agencé pour allouer à tout mobile abonné du premier opérateur, respectivement du deuxième opérateur, une identité temporaire d'abonné mobile comprenant l'identificateur de ressource attribué à ce noeud de réseau coeur avec la valeur distinctive de l'appartenance du noeud de réseau coeur au premier opérateur, respectivement au deuxième opérateur

Avantageusement dans le réseau de télécommunication, chaque batterie comprend un noeud de réseau coeur de chaque opérateur et identificateur de ressource comprend un bit de premier état pour le premier opérateur et de deuxième état pour le deuxième opérateur.

Lorsque plus de deux opérateurs se partagent le réseau d'accès, identificateur est constitué d'une suite de bits qui code le nombre d'opérateurs en base deux de sorte qu'il existe toujours au moins un bit de première valeur pour un premier opérateur et de deuxième valeur pour un deuxième opérateur.

Un troisième objet de l'invention est un procédé de télécommunication cellulaire au moyen de contrôleurs d'un réseau d'accès radio et d'un mobile autorisé à utiliser des services de communication d'un premier opérateur qui gère un premier réseau coeur ou d'un deuxième opérateur qui gère un deuxième réseau coeur.

Le procédé de télécommunication est remarquable en ce qu'un contrôleur de réseau d'accès recevant du mobile, un message à transmettre vers celui du premier ou du deuxième réseau coeur, aiguille ledit message à transmettre, dans une batterie de noeuds de premier et de deuxième réseaux coeur auxquels ledit contrôleur est relié , vers un noeud du premier réseau coeur ou vers un noeud du deuxième réseau coeur en fonction d'une valeur émise par le mobile vers ledit contrôleur, ladite valeur étant distinctive pour l'opérateur dont le mobile est autorisé à utiliser les services de communication.

L'opérateur dont le mobile est autorisé à utiliser les services est par exemple l'opérateur auprès duquel le mobile est abonné ou l'opérateur ayant conclu un accord d'itinérance avec un opérateur auprès duquel le mobile est abonné.

Particulièrement, lorsque le contrôleur de réseau détecte dans le message que la valeur contenue est une image d'identité permanente, le noeud de réseau coeur vers lequel ledit contrôleur aiguille le message, est du premier réseau coeur si la valeur contenue est couverte par une première plage de valeurs réservée au premier opérateur et du deuxième réseau coeur si la valeur contenue est couverte par une deuxième plage de valeurs réservée au deuxième opérateur.

L'image d'identité permanente peut être une partie de l'identité permanente, l'identité permanente elle-même ou le résultat d'une transformation connue appliquée à l'identité permanente.

Particulièrement aussi, lorsque le contrôleur de réseau détecte dans le message que la valeur contenue est une image d'identité temporaire, le noeud de réseau coeur vers lequel ledit contrôleur aiguille le message, est celui dont un identificateur de ressource compris dans l'image d'identité temporaire, distingue une appartenance du noeud au premier réseau coeur ou au deuxième réseau coeur.

Plus particulièrement, chaque batterie comprenant un noeud de réseau coeur par opérateur avec pour chaque noeud de réseau coeur d'un même opérateur, un même identificateur de ressource dans toutes les batteries, lorsqu'un premier contrôleur de réseau d'accès aiguille un message reçu d'un mobile vers un premier noeud déterminé par un premier identificateur de ressource dans une première batterie, un deuxième contrôleur de réseau d'accès qui reçoit le message, aiguille le message vers un deuxième noeud déterminé par le même premier identificateur de ressource dans une deuxième batterie.

Le procédé de télécommunication facilite alors la mobilité du mobile qui passe vers une situation sous le contrôle d'un nouveau contrôleur relié à la deuxième batterie, depuis une situation sous le contrôle d'un ancien contrôleur relié à la première batterie différente de la première batterie. Si les deux contrôleurs sont reliés à la même batterie, le deuxième noeud reste simplement le premier noeud.

Particulièrement encore, un message pour établir la connexion radio contient une identité permanente du mobile dont un champ identifie celui des opérateurs auprès duquel le mobile est abonné, le contrôleur de réseau d'accès recevant le message pour établir la connexion radio, établit la connexion radio et associe à la connexion radio établie, tout ou partie de l'identité permanente comprenant au moins le champ qui identifie celui des opérateurs auprès duquel le mobile est abonné, et le contrôleur de réseau d'accès recevant le message à transmettre par la connexion établie, déduit la valeur distinctive du tout ou partie de l'identité permanente associée à la connexion radio

Ce procédé de télécommunication est une utilisation avantageuse d'un réseau de télécommunication produit par un procédé de production conforme à l'invention dans un système d'interconnexion de plusieurs opérateurs à un même réseau d'accès.

L'invention sera mieux comprise au vu d'un exemple de réalisation décrit à présent en référence aux dessins annexés dans lesquels:
- la figure 1 montre un réseau de télécommunication différent de celui de l'invention en ce que l'interconnexion d'un deuxième réseau coeur se fait au niveau d'un premier réseau coeur;
- la figure 2 montre un autre réseau de télécommunication différent de celui de l'invention en ce que l'interconnexion d'un deuxième réseau coeur se fait par allocation dans le réseau d'accès, de canaux de transmission distincts de ceux d'un premier réseau coeur;
- la figure 3 montre encore un autre réseau de télécommunication différent de celui de l'invention en ce qu'un réseau coeur unique est connecté au réseau d'accès;
- la figure 4 montre un fonctionnement du réseau de télécommunication de la figure 3.
- la figure 5 montre des étapes de procédé de production d'un réseau de télécommunication conforme à l'invention;
- la figure 6 montre un réseau de télécommunication conforme à l'invention;
- les figures 7, 8 et 9 montrent des étapes de procédé de télécommunication conforme à l'invention.

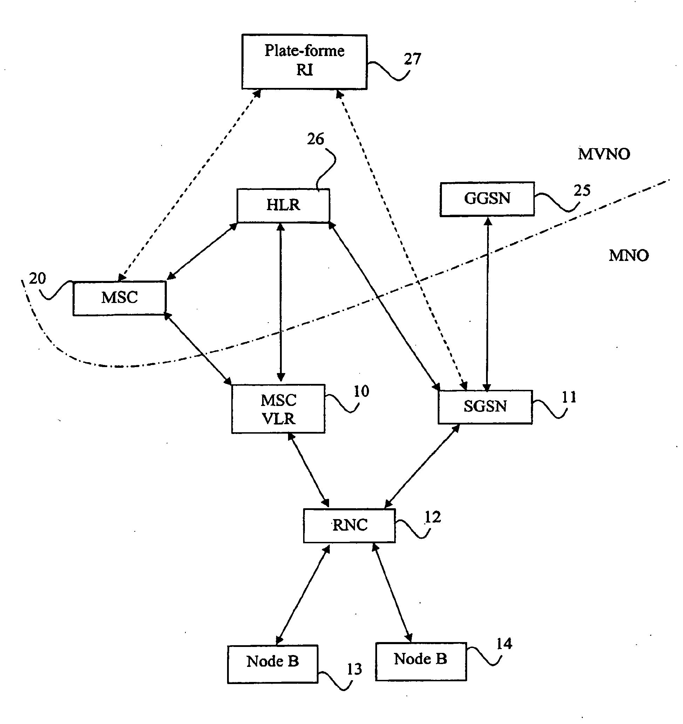

La figure 1 présente une architecture possible de l'état de la technique dans laquelle un opérateur hôte héberge un opérateur virtuel (MVNO en abrégé pour Mobile Virtual Network en anglais). Au sens de l'invention, un MVNO est un opérateur ne possédant pas de fréquences et de réseau d'accès. L'opérateur hôte dispose d'un réseau qui comprend un réseau coeur et un réseau d'accès. L'opérateur virtuel quant à lui dispose d'un réseau qui ne comprend qu'un réseau coeur et pas de réseau d'accès. En référence à la figure 1 qui à titre illustratif, utilise la terminologie UMTS, le réseau coeur de l'opérateur hôte comprend des noeuds de réseau coeur tels que des centres de commutation 10 pour téléphones mobiles (MSC en abrégé pour Mobile Switching Center en anglais), et tels que des routeurs de paquets 11 (SGSN en abrégé pour Serving GPRS Support Node en anglais). Le réseau coeur comprend aussi d'autres noeuds de réseau coeur non représentés tels que par exemple une base de données de réseau coeur (HLR en abrégé pour Home Location Register en anglais). Le réseau d'accès comprend des contrôleurs de réseau radio 12 (RNC en abrégé pour Radio Network Controller en anglais) et généralement plusieurs stations émettrices et réceptrices 13, 14 (Node B dans le vocabulaire UMTS qui constitue simplement un type de réseau possible parmi d'autres tels que GSM par exemple).

De façon connue, chaque station émettrice-réceptrice est essentiellement constituée d'une antenne qui couvre une zone géographique pour émettre et recevoir des signaux électromagnétiques en provenance et à destination de téléphones mobiles situés dans cette zone. En technologie GSM, une station émettrice-réceptrice est nommée station de base.

Le RNC 12 a une fonction équivalente à un contrôleur de station de base (BSC en abrégé pour Base Station Controler en anglais) dans un réseau GSM. La fonction essentielle est d'une part l'acheminement des communications entre le node B et le réseau coeur et d'autre part le contrôle et la supervision du node B. Sans importance pour la compréhension de l'invention, un RNC se distingue d'un BSC par des procédures de relocalisation et de gestion de liens de macrodiversité.

Le MSC 10 est un commutateur de données et de signalisation pour gérer l'établissement d'une communication avec un téléphone mobile en faisant passer cette communication en mode circuit par le RNC qui contrôle le node B qui couvre la zone correspondant à une localisation du téléphone mobile. Pour gérer l'établissement de communication, le MSC dispose d'une base de données de localisation temporaire d'abonnés mobiles (VLR en abrégé pour Visitor Location Register en anglais). Le VLR est une base de données qui alloue des identités temporaires (TMSI en abrégé pour Temporary Mobile Subscriber Identity en anglais) à des téléphones mobiles d'abonnés qui se trouvent dans une zone géographique supervisée par le VLR, de façon à pouvoir gérer chaque communication. Bien qu'un même VLR peut être associé à un ou plusieurs MSC, un VLR est généralement associé à un MSC qui réside dans un même équipement physique. Le VLR mémorise aussi bien des localisations et des données d'abonnés du réseau lui-même que d'abonnés d'autres réseaux momentanément pris en charge. Les abonnés d'autres réseaux momentanément pris en charge sont ceux en itinérance (roaming en anglais) et pour lesquels les opérateurs d'autres réseaux ont conclu des accords avec l'opérateur du réseau lui-même qui autorise alors tant ces abonnés d'autres réseaux que ses abonnés propres, à utiliser ses services de communication.

Le SGSN 11 est un routeur de données avec des fonctions spécifiques aux réseaux mobiles, pour gérer une communication avec un téléphone mobile en faisant passer cette communication en mode paquet par le RNC qui contrôle le node B qui couvre la zone correspondant à une localisation du téléphone mobile. Pour gérer la communication, le SGSN effectue une allocation d'identité temporaire (P-TMSI) qui a un rôle semblable à celui du TMSI, adapté à la transmission de données en mode paquet (GPRS en abrégé pour General Packet Radio Service en anglais). Le SGSN remplit des fonctions spécifiques au mode paquet équivalentes à celles du mode circuit remplies par le MSC et le VLR.

Le réseau coeur de l'opérateur virtuel comprend des noeuds de réseau coeur tels que des MSC 20, un ou plusieurs HLR 26, une ou plusieurs plate-formes 27 dite Rl, acronyme de réseau intelligent et une ou plusieurs passerelles GPRS 25 (GGSN en abrégé pour Gateway GPRS Support Node en anglais).

A la différence du MSC 10, le MSC 20 n'est pas associé à un VLR mais il est connecté d'une part au HLR 26 de l'opérateur virtuel et d'autre part au MSC 10 de l'opérateur hôte. Comme expliqué par la suite, le MSC 10 réalise une fonction de passerelle (Gateway en anglais) pour le mode circuit entre le réseau de l'opérateur virtuel et le ou les MSC de l'opérateur hôte.

Le HLR 26 contient les données relatives aux abonnés de l'opérateur virtuel telles que des informations de souscription et pour chaque abonné, des informations sur le MSC 10 et le SGSN 11 qui répertorie cet abonné.

Le réseau intelligent Rl a pour fonction d'introduire des fonctionnalités et des services supplémentaires dans le réseau général substantiellement sans modifier la structure existante, notamment les commutateurs. Une couche supplémentaire d'intelligence est mise en oeuvre dans le réseau entre les commutateurs du réseau général et les applications supportant les services. Le concept de Rl repose sur deux principes de base. Le premier principe est dans une séparation entre d'une part, la signalisation par laquelle transitent les informations de service et d'autre part la transmission de la voix ou des données. Le deuxième principe est dans une distinction entre d'une part, les fonctions communes de commutation et d'autre part, ce qui est spécifique au service. Ce concept permet de réduire les coûts d'introduction et de développement de services supplémentaires dans le réseau.

Le GGSN 25 se connecte de façon usuelle au SGSN 11 qui convient pour transmettre en mode paquets, des données en provenance ou à destination de réseaux de données extérieurs. L'établissement de la session de données et le choix du GGSN se font au moyen d'un nom de domaine (APN en abrégé pour Access Point Name en anglais).

Le routage en mode circuit dans le sens montant se fait selon deux alternatives possibles. Dans une première alternative, le routage des appels des abonnés de l'opérateur virtuel est systématiquement fait vers les commutateurs de l'opérateur virtuel (home routing en anglais), basé sur l'identité internationale d'abonné mobile (IMSI en abrégé pour International Mobile Subscriber Identity en anglais). De façon connue, l'IMSI est une identité permanente du mobile qui se compose d'un code pays (MCC), d'un code opérateur (MNC) et d'un identifiant d'abonné du réseau (MSIN). Cette identité est envoyée par le mobile lorsqu'il n'a pas encore d'identifiant temporaire, par exemple à l'allumage du mobile. Dans une deuxième alternative, l'appel sortant est routé en fonction du numéro demandé, avec un traitement semblable à celui des abonnés de l'opérateur hôte.

On note que selon l'état de la technique représenté en figure 1, l'interconnexion se fait dans le réseau coeur de l'opérateur hôte.

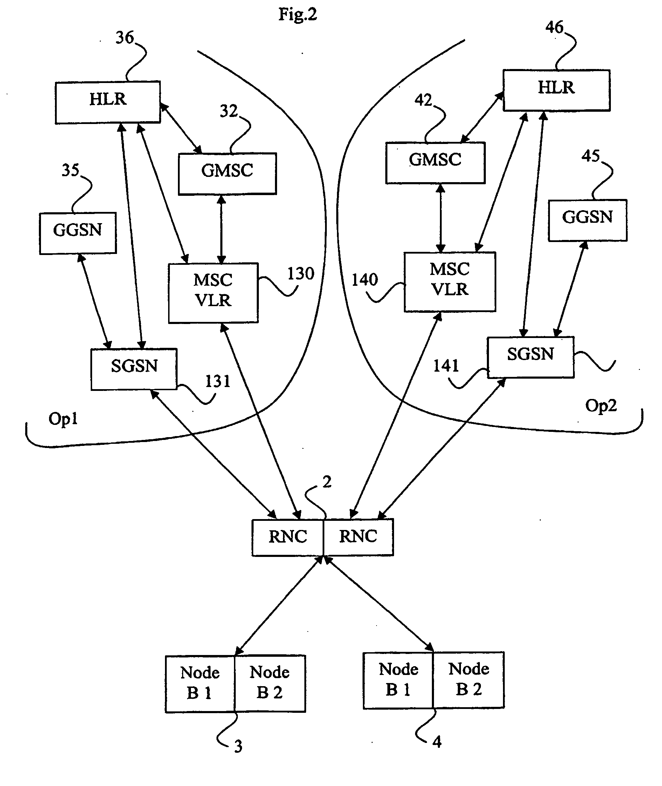

La figure 2 présente une autre architecture possible de l'état de la technique dans laquelle deux opérateurs Op1 et Op2 se partagent un même réseau d'accès avec pour chacun des fréquences et des cellules spécifiques.

Le réseau d'accès comprend au moins un RNC 2 pour contrôler des node B 3, 4.

Le réseau coeur de l'opérateur Op1 comprend son ou ses propres HLR 36, son ou ses propres MSC VLR 130, son ou ses propres SGSN 131, son ou ses propres GGSN 35 et sa ou ses propres passerelles 32 de MSC (GMSC en abrégé pour Gateway MSC en anglais). Un GMSC est un MSC avec une fonction passerelle pour router les appels entrant venant du réseau de téléphonie fixe ou d'autres réseaux de téléphonie mobile. La plupart des MSC ont la fonction passerelle. Un MSC 130 et un SGSN 131 sont agencés pour se connecter sur une partie du RNC 2 spécialement attribuée sous forme logique au réseau coeur Op1. Cette partie du RNC 2 est agencée pour contrôler dans chaque node B 3, 4, une partie dite node B1 avec des fréquences réservées pour le réseau coeur d'opérateur Op1.

Le réseau coeur de l'opérateur Op2 comprend son ou ses propres HLR 46, son ou ses propres MSC VLR 140, son ou ses propres SGSN 141, son ou ses propres GGSN 35 et sa ou ses propres GMSC 42. Un MSC 140 et un SGSN 141 sont agencés pour se connecter sur une partie du RNC 2 spécialement attribuée sous forme logique au réseau coeur Op2. Cette partie du RNC 2 est agencée pour contrôler dans chaque node B 3, 4, une partie dite node B2 avec des fréquences réservées pour le réseau coeur d'opérateur Op2.

Le routage dans le sens montant, mobile vers réseau, se fait suivant la cellule où le mobile s'est connecté, sans nécessiter de fonction particulière ou de table de routage.

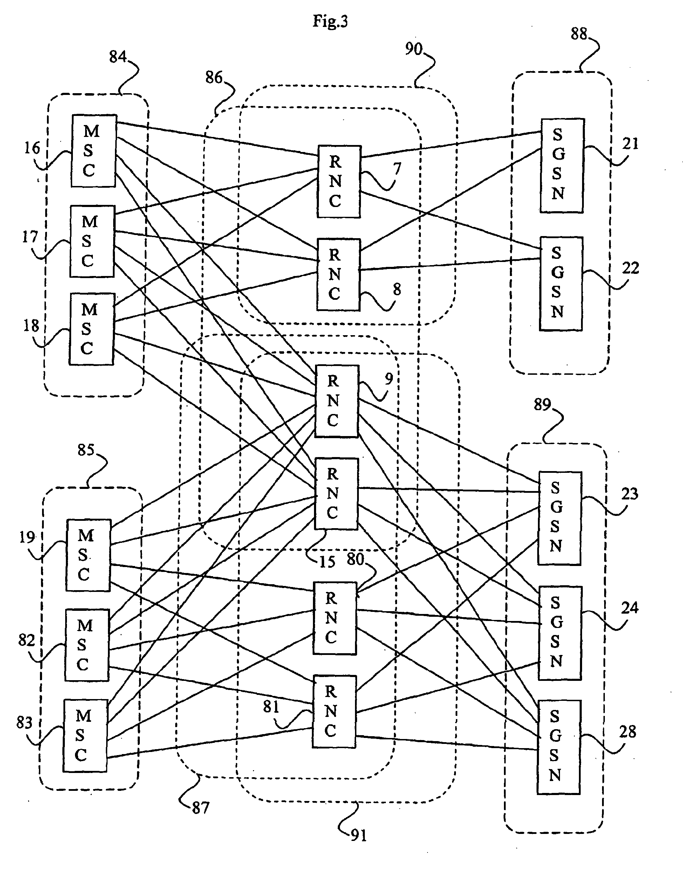

La figure 3 présente une architecture qui met en oeuvre la recommandation 3GPP TS 23.236 intitulée "Intra-domain connection of Radio Access Network (RAN) nodes to multiple Core Network (CN) nodes".

Des contrôleurs d'accès radio du réseau d'accès, sont ici représentés par des RNC 7, 8, 9, 15, 80, 81. Un ensemble de noeuds de réseau coeur d'un même opérateur, comprend des centres de commutation et des routeurs de paquets représentés respectivement par des MSC 16, 17, 18, 19, 82, 83 et par des SGSN 21, 22, 23, 24, 28. Les explications qui suivent avec la terminologie UMTS sont transposables à la terminologie GSM en remplaçant les RNC par des BSC.

La recommandation 3GPP TS 23.236 définit une fonction nommée "lu-Flex" pour relier plusieurs noeuds de réseau coeur à un même contrôleur de réseau d'accès. La fonction existe aussi bien pour l'UMTS que pour le GSM/GPRS/EDGE avec des adaptations mineures pour chacun. Des adaptations similaires sont envisageables pour tout autre type de réseau cellulaire. L'objectif est notamment de faire du partage de charge entre les noeuds de réseau coeur. Tous les RNC, tous les MSC et tous les SGSN appartiennent à un même opérateur selon la recommandation 3GPP TS 23.236.

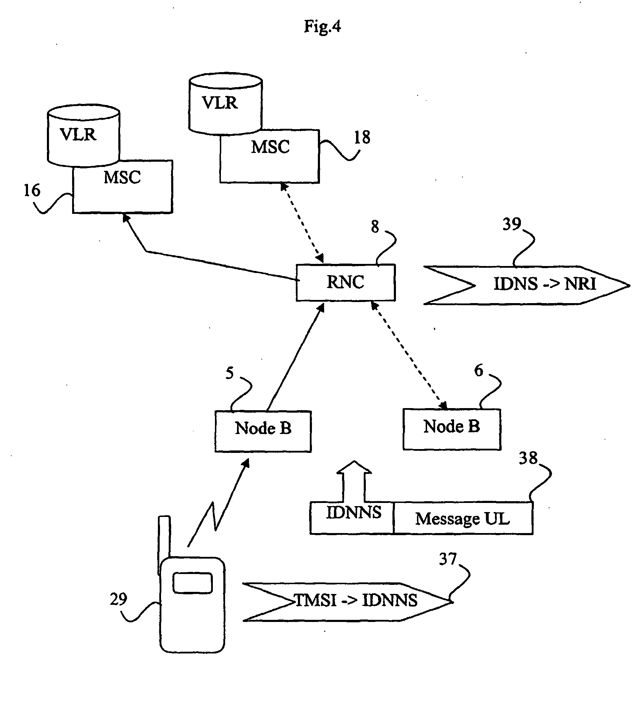

Pour mettre en oeuvre la fonction lu-Flex, on définit les MSC, respectivement les SGSN, qui appartiennent à une même batterie de commutateurs, respectivement à une même batterie de routeurs. Par exemple sur la figure 3, une batterie de commutateurs 84 comprend les MSC 16, 17 et 18, une batterie de commutateurs 85 comprend les MSC 19, 82 et 83, une batterie de routeurs 88 comprend les SGSN 21 et 22, une batterie de routeurs 89 comprend les SGSN 23, 24 et 28. Les quantités de MSC par batterie de commutateurs et de SGSN par batterie de routeurs, sont quelconques à discrétion de l'opérateur. Pour chaque contrôleur de type RNC, on définit la ou les batteries de commutateurs et la ou les batteries de routeurs auxquelles le RNC est rattaché. Par exemple sur la figure 4, les RNC 7, 8 sont rattachés à la batterie de commutateurs 84 et à la batterie de routeurs 88, les RNC 9, 15 sont rattachés aux batteries de commutateurs 84, 85 et à la batterie de routeurs 89, les RNC 80, 81 sont rattachés à la batterie de commutateurs 85 et à la batterie de routeurs 89. A la batterie de commutateurs 84, est associée une zone 86 qui comprend les RNC 7, 8, 9, 15. A la batterie de commutateurs 85, est associée une zone 87 qui comprend les RNC 9, 15, 80, 81. A la batterie de routeurs 88, est associée une zone 90 qui comprend les RNC 7, 8. A la batterie de routeurs 89, est associée une zone 91 qui comprend les RNC 9, 15, 80, 81. Une zone en mode commutation de circuit peut comprendre les mêmes RNC qu'une zone en mode paquets comme c'est ici le cas des zones 87 et 91 ou comprendre des RNC différents de ceux d'une zone en mode paquet comme c'est ici le cas des zones 86 et 90. Deux zones peuvent aussi se chevaucher pour un même mode commutation de circuit ou paquet comme c'est ici le cas des zones 86 et 87. Chaque RNC attaché à une batterie de commutateurs ou de routeurs, est attaché à chaque commutateur de la batterie de commutateurs ou à chaque routeur de la batterie de routeurs. Par exemple le RNC 7 attaché à la batterie de commutateurs 84, est attaché aux MSC 16, 17, 18. Chaque RNC attaché à plusieurs batteries de commutateurs ou de routeurs, est attaché à chaque commutateur des batteries de commutateurs ou à chaque routeur des batteries de routeurs. Par exemple le RNC 9 attaché aux batteries de commutateurs 84 et 85, est attaché aux MSC 16, 17, 18, 19, 82, 83. La fonction lu-Flex gère le routage des messages de sens montant à partir du RNC et la sélection de noeuds de réseau coeur dans des cas de mobilité. Il se présente essentiellement quatre cas.

Un premier cas concerne le routage pour un mobile ayant uniquement une identité permanente IMSI. Le routage est basé sur l'IMSI envoyé par le mobile dans le message initial à destination du réseau coeur. Plus précisément, c'est un dérivé de l'IMSI qui est envoyé f(IMSI).

Un deuxième cas concerne le routage pour un mobile ayant une identité temporaire TMSI allouée par un noeud de réseau coeur. Le routage est basé sur le TMSI envoyé par le mobile dans le message initial à destination du réseau coeur. Plus précisément, c'est un extrait du TMSI qui est envoyé. L'identité temporaire TMSI est celle du mode circuit, les explications restent valables pour l'identité temporaire P-TMSI qui est celle du mode paquets.

Un troisième cas concerne la mobilité qui implique un changement de noeud de réseau coeur en mode inactif (idle en anglais). C'est à dire que le mobile est enregistré dans le réseau mais n'est pas connecté. Pour du partage de charge, un RNC sélectionne librement un noeud de réseau coeur suivant un algorithme non défini par le standard de la recommandation 3GPP TS 23.236. Le routage est alors effectué vers le noeud sélectionné. Le routage peut aussi être basé sur un ancien TMSI, c'est à dire sur l'identifiant temporaire alloué par l'ancien noeud de réseau coeur. Le choix dépend du paramétrage de la fonction, par exemple NRI (expliqués par la suite) distincts ou non dans des batteries adjacents.

Un quatrième cas concerne la mobilité qui implique un changement de noeud de réseau coeur en mode actif. C'est à dire que le mobile est connecté pour une communication en mode circuit ou en mode paquet. Pour du partage de charge, l'ancien noeud de réseau coeur sélectionne un nouveau noeud de réseau coeur suivant un algorithme non défini par le standard de la recommandation 3GPP TS 23.236. Le routage est alors effectué vers le noeud sélectionné.

En GSM et en UMTS, seule les messages initiaux de signalisation ont besoin d'être routés. Dès qu'une connexion est établie tant pour véhiculer des données usager qu'éventuellement d'autres données de signalisation, les problèmes de routage comme dans les quatre cas précédemment décrits ne se posent plus. L'acheminement des messages se fait simplement sur cette connexion établie entre le mobile et le RNC et entre le RNC et le réseau coeur. En GPRS, il n'existe jamais de connexion établie à proprement parlé, le routage est exécuté pour chaque trame tant de signalisation que de données usager.

A titre d'exemple, la figure 4 illustre le routage lu-Flex pour le deuxième cas. Un mobile 29 émet une onde électromagnétique porteuse qui est réceptionnée par le noeud 5, lequel est contrôlé par le RNC 8.

Dans une étape 37, le mobile traite un paramètre (nommé IDNNS pour Intra Domain NAS Node Selector en anglais). Dans les réseaux UMTS, l'acronyme NAS réfère aux termes anglais Non Access Stratum, c'est à dire la couche du réseau comprenant les fonctions indépendantes de la couche d'accès. Lorsque le mobile 29 s'enregistre auprès d'un noeud de réseau coeur tel que le MSC 16, le noeud de réseau coeur alloue un TMSI au mobile 29. Le TMSI comprend généralement trente-deux bits b0, b1, ..., b31. Cette allocation est faite de sorte que le TMSI contienne un identificateur de ressource réseau (NRI en abrégé pour Network Ressource Identifier en anglais) qui identifie de façon unique le noeud de réseau coeur au sein d'une batterie ou de façon optionnelle, au sein aussi des batteries qui couvrent des zones géographiques adjacentes à celle où se situe le mobile. Le TMSI contient alors le NRI à une position prédéterminée, par exemple du bit b23 jusque potentiellement au bit b14, en fonction d'une longueur choisie de NRI lors de la configuration des noeuds de réseau coeur. Le bit b23 suffit lorsque la longueur du NRI est de un bit. Le mobile 29 extrait les bits b23 à b14 du TMSI pour former le paramètre de routage IDNNS comme spécifié dans la norme 25-331. Pour émettre des messages UL à destination du réseau coeur, le mobile 29 encapsule ces messages dans des trames de bits 38 émises avec le paramètre IDNNS en entête.

Lorsque dans une étape 39, le RNC 8 reçoit une trame de bits 38 via le node B 5 en provenance du mobile 29, le RNC 8 extrait le NRI du paramètre IDNNS. Le RNC comprend une table de routage qui donne une correspondance entre le NRI et une adresse de noeud de réseau coeur. Cette adresse est par exemple celle du MSC 16 dans l'illustration de la figure 4. Le VLR du MSC 16 qui comprend le TMSI, comprend aussi implicitement le NRI qui constitue une partie du TMSI. Ceci permet à un nouveau noeud de réseau coeur de retrouver un ancien noeud et les informations sur le mobile qui y est référencé.

Lorsque le mobile 29 ne possède que l'IMSI, il élabore une valeur d'IDNNS égale à f(IMSI) tel que spécifié dans la recommandation 3GPP TS 25.331.

Pour le GSM en mode circuit, le contrôleur de station de base (BSC en abrégé pour Base Station Controler en anglais) lit le TMSI inclus dans les messages initiaux à destination du réseau coeur et en extrait le NRI. Si seul l'IMSI est envoyé, par exemple à l'inscription, le BSC choisit librement un MSC au moyen d'un algorithme propre à la mise en oeuvre.

Pour le GPRS en mode paquet, le protocole connu LLC (acronyme de Logical Link Control en anglais) permet d'établir un lien entre le mobile et l'un des SGSN. Dans une trame LLC, on trouve un identifiant de connexion appelé TLLI (acronyme de Temporary Logical Link Identifier en anglais). Lorsqu'un SGSN a attribué un P-TMSI au mobile, le TLLI contient un sous-ensemble généralement des trente bits de poids faibles du P-TMSI contenant trente-deux bits. Le BSC lit le TLLI dans les trames LLC, plus exactement au niveau des blocs RLC/MAC encapsulant la trame LLC, et extrait le NRI pour router vers le SGSN qui convient. Lorsque le mobile n'a pas de P-TMSI alloué par un SGSN, le mobile choisit de façon aléatoire les vingt sept bits de poids faibles du TLLI, les autres bits indiquant que le TLLI est de type aléatoire. Le BSC choisit alors librement un SGSN en fonction de l'algorithme mis en oeuvre. Ceci n'est acceptable que lorsque le choix d'un SGSN est indifférent, par exemple lorsque tous les SGSN appartiennent à un même opérateur.

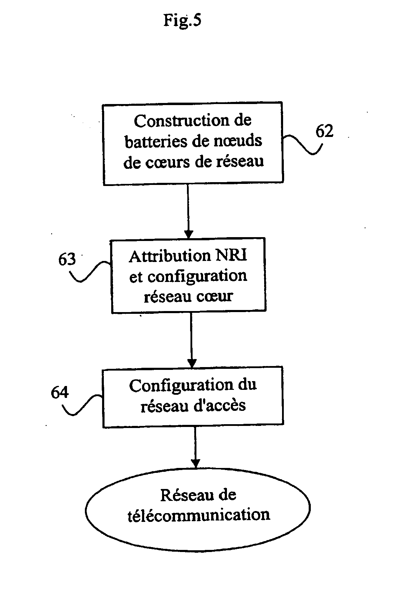

La figure 5 montre un procédé de production de réseau de télécommunication cellulaire permettant à un opérateur dit virtuel qui ne possède pas de réseau d'accès radio, d'utiliser un réseau d'accès radio géré par un opérateur dit hôte.

Dans une première étape 62, on définit des batteries de noeuds de réseau coeur comprenant au moins un noeud de réseau coeur de l'opérateur hôte et au moins un noeud de réseau coeur de l'opérateur virtuel, on associe des contrôleurs de réseau d'accès à chaque batterie et on relie à chaque noeud de réseau coeur d'une même batterie, les contrôleurs de réseau d'accès associés à cette batterie.

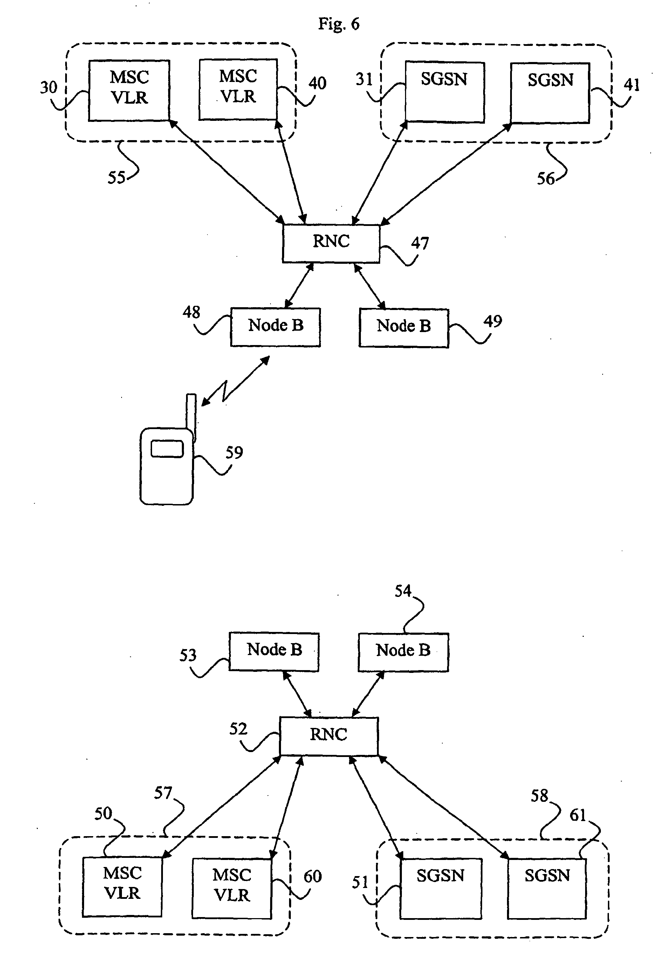

Sur le schéma simplifié de la figure 6, on considère dans le réseau coeur de l'opérateur hôte, des noeuds 30, 50 de type MSC et des noeuds 31, 51 de type SGSN. Généralement, un MSC 30, respectivement un MSC 50, est normalement relié à plusieurs contrôleurs de transmission 47, respectivement 52 du réseau d'accès. Il en est de même des SGSN 31, 51. Les contrôleurs de réseau d'accès 47, 52 destinés à être utilisés par l'opérateur virtuel, sont par exemple de type BSC en technologie GSM ou de type RNC en technologie UMTS. On définit les batteries de noeuds de réseau coeur par domaine, commutation de circuit et paquets comme dans la fonction lu-Flex de la recommandation 3GPP TS 23.236 établie pour un opérateur unique. Des batteries 55, 57, sont spécialement attribuées aux noeuds de réseau coeur de type MSC et des batteries 56, 58, sont spécialement attribués aux noeuds de réseau coeur de type SGSN. Dans la batterie 55, on relie un MSC 40 de réseau coeur de l'opérateur virtuel à tous les contrôleurs de réseau d'accès 47 qui sont reliés au MSC 30. Dans la batterie 57, on relie un MSC 60 de réseau coeur de l'opérateur virtuel à tous les contrôleurs de réseau d'accès 52 qui sont reliés au MSC 50. Dans la batterie 56, on relie un SGSN 41 de réseau coeur de l'opérateur virtuel à tous les contrôleurs de réseau d'accès 47 qui sont reliés au SGSN 31. Dans la batterie 58, on relie un SGSN 61 de réseau coeur de l'opérateur virtuel à tous les contrôleurs de réseau d'accès 52 qui sont reliés au SGSN 51. La fonction connue lu-Flex n'est pas modifiée en tant que telle mais pour en élargir l'usage à plusieurs coeurs de réseau gérés par des opérateurs différents, un paramétrage particulier de cette fonction va maintenant être décrit afin de faire fonctionner l'interconnexion conformément à l'invention. Chaque batterie 55, 57 peut comprendre d'autres commutateurs d'opérateur hôte et d'opérateur virtuel pour faire par exemple de l'équilibrage de charge ou du partage de réseau d'accès avec plusieurs opérateurs virtuels. Chaque batterie 56, 58 peut comprendre d'autres routeurs d'opérateur hôte et d'opérateur virtuel pour faire par exemple de l'équilibrage de charge ou du partage de réseau d'accès avec plusieurs opérateurs virtuels.

Dans une deuxième étape 63, on attribue à chaque noeud d'une même batterie de commutation, un identificateur de ressource nommé NRI dans la recommandation 3GPP TS 23.236. L'identificateur NRI est utilisable sur les liens montants (up link en anglais) du mobile vers le réseau coeur pour permettre au contrôleur de réseau d'accès d'aiguiller une communication sur lien montant vers le noeud de réseau coeur qui convient. L'identificateur NRI est aussi utilisable pour qu'un noeud de réseau coeur puisse retrouver à partir d'un ancien TMSI ou P-TMSI et d'une connaissance d'ancienne zone de localisation d'un mobile, l'adresse d'un ancien noeud de réseau coeur qui peut avoir des informations sur le mobile. Chaque contrôleur de réseau d'accès comprend une table de routage qui comprend des correspondances associatives entre des valeurs de NRI réservées à l'opérateur hôte et des adresses de noeuds de réseau coeur de l'opérateur hôte d'une part, entre des valeurs de NRI réservées à l'opérateur virtuel et des adresses de noeuds de réseau coeur de l'opérateur virtuel d'autre part.

Une façon simple pour attribuer les NRI dans l'étape 63, consiste à mettre en étape 62, un noeud de réseau coeur de l'opérateur pour chaque opérateur dans une batterie et à définir l'identificateur NRI comme étant un bit de valeur par exemple égale à zéro pour un noeud de l'opérateur hôte et égale à un pour un noeud de l'opérateur virtuel. Les NRI ayant la même valeur pour le noeud de l'opérateur hôte, respectivement pour le noeud de l'opérateur virtuel dans tous les batteries de noeuds de réseau coeur, l'aiguillage par le contrôleur de réseau d'accès peut se faire automatiquement vers le bon noeud de réseau coeur lorsque le mobile se déplace, passant d'une zone couverte par un premier contrôleur à une zone couverte par un deuxième contrôleur. La répartition de charge pour laquelle la fonction lu-Flex a été prévue, reste possible en mettant plusieurs noeuds de réseau coeur d'un même opérateur dans une même batterie de noeuds de réseau coeur. Le NRI comprend alors plusieurs bits, celui à zéro ou à un pour indiquer l'opérateur hôte ou virtuel et les autres bits pour gérer la répartition de charge parmi les noeuds d'un même opérateur.

Généralement, le réseau coeur d'un opérateur, alloue à chaque mobile reconnu, une identité temporaire TMSI ou P-TMSI qui permet de suivre le mobile dans son déplacement sans avoir à communiquer en permanence l'identité d'abonné IMSI du mobile.

Dans l'étape 63, chaque noeud de réseau coeur est configuré pour allouer chaque TMSI ou P-TMSI de façon à contenir une valeur de NRI, égale au NRI de ce noeud. Alors que dans le cas d'un opérateur unique, les TMSI ou P-TMSI peuvent être librement choisis par cet opérateur, une concertation préalable entre opérateurs sur des choix spécifiques de NRI par opérateur dans le cas de plusieurs opérateurs, induit une génération de TMSI ou P-TMSI spécifiques à chaque opérateur. Ceci permet ultérieurement aux contrôleurs de réseau d'accès du réseau d'accès, d'extraire le NRI du TMSI ou P-TMSI joint à un message émis par le mobile puis d'aiguiller le message vers le noeud de réseau coeur possédant une valeur de NRI qui correspond à l'opérateur auprès duquel le mobile est enregistré car cette valeur est contenue dans un TMSI ou P-TMSI alloué au mobile par un noeud de réseau coeur de cet opérateur.

Avant de s'être enregistré auprès d'un réseau coeur, le mobile ne dispose pas de TMSI. Généralement, le mobile envoie une image f(IMSI) de son identité d'abonné qui est l'IMSI lui-même dans le cas GSM ou un morceau d'IMSI converti en binaire dans le cas UMTS. Dans le cas GPRS, le mobile envoie un nombre aléatoire indépendant de l'IMSI. Cette nature aléatoire n'est pas gênante lorsque les contrôleurs de réseau d'accès du réseau d'accès sont reliés au réseau coeur d'un seul opérateur. Tout contrôleur de réseau d'accès recevant un message de mobile, aiguille le message vers un noeud de réseau coeur auquel il est relié. Le noeud de réseau coeur recevant ce message, peut alors attribuer un TMSI ou P-TMSI au mobile pour en assurer ultérieurement le suivi.

Dans l'étape 64, chaque contrôleur de réseau d'accès prévu dans le réseau d'accès pour être partagé par l'opérateur hôte et par l'opérateur virtuel, est configuré pour distinguer la plage de valeur dans laquelle il reçoit une image f(IMSI). Dans le contrôleur de réseau d'accès, la table de routage donnant la correspondance V=f(IMSI) -> adresse du noeud CN, est construite de la façon suivante: plage de f(IMSI) du MNO -> adresse du noeud MNO et plage de f(IMSI) du MVNO -> adresse du noeud MVNO. Ainsi, le contrôleur de réseau d'accès, par exemple le RNC 47 ou 52 de la figure 6, est configuré pour aiguiller tout message reçu avec en entête une image d'identité dans la première plage de valeurs vers un noeud de réseau coeur, par exemple le MSC 30 ou le SGSN 31, de l'opérateur hôte et tout message reçu avec en entête une image d'identité dans la deuxième plage de valeurs vers un noeud de réseau coeur, par exemple le MSC 40 ou le SGSN 41 de l'opérateur virtuel. Ainsi, en réservant à chaque opérateur une plage de valeurs distincte, il suffit au mobile d'émettre une valeur dans la plage de valeurs réservée à l'opérateur auprès duquel il est abonné, pour permettre au contrôleur de réseau d'accès d'aiguiller le message vers le réseau coeur qui convient. Ceci est particulièrement intéressant tant que le mobile n'a pas de TMSI qui contient le NRI.

En GSM, la plage de valeur peut résulter du fait que l'image de IMSI est le IMSI lui-même qui est une concaténation du code pays MCC, du code opérateur MNC et de l'identifiant d'abonné réseau MSIN chez l'opérateur. Ainsi, le MCC avec le MNC de l'opérateur hôte définit par exemple une première plage de valeurs qui commence à la valeur définie par les bits du MCC et du MNC suivis par des bits de MSIN tous à zéro et qui termine à la valeur définie par les bits du MCC et du MNC suivis par des bits de MSIN tous à un. De même, le MCC et le MNC de l'opérateur virtuel définit par exemple une deuxième plage de valeurs qui commence à la valeur définie par les bits du MCC et du MNC suivis par des bits de MSIN tous à zéro et qui termine à la valeur définie par les bits du MCC et du MNC suivis par des bits de MSIN tous à un. La plage de valeurs peut résulter aussi d'une plage de valeurs définie dans le MSIN indépendamment du MCC et du MNC.

En UMTS, l'image de IMSI comprenant une partie des digits du MSIN, par exemple trois, on impose à chaque opérateur d'attribuer à ses abonnés, les MSIN de façon à ce que ces trois digits définissent des nombres en base dix dans un segment réservé à l'opérateur. Chaque opérateur reste libre de définir à sa convenance, les digits précédents et le ou les digits suivants. Ainsi, pour chaque opérateur, les digits qui constituent l'image de IMSI, définissent une plage de valeurs réservée à l'opérateur.

A la lumière des explications qui précèdent, on comprend que le mobile envoie une valeur qui est distinctive de l'opérateur auprès duquel il est abonné. Cette valeur est distinctive par le fait qu'elle comprend un NRI propre à l'opérateur lorsque le mobile possède un TMSI ou un P-TMSI et par le fait qu'elle est dans une plage de valeurs réservée à l'opérateur lorsque le mobile ne possédant pas de TMSI ou de P-TMSI, envoie une image de IMSI.

Le modèle lu-flex pour lequel le mobile envoie la valeur distinctive en entête d'un message à transmettre vers le réseau coeur, tel que vu précédemment, constitue un moyen possible parmi d'autres pour mettre en oeuvre l'invention.

La valeur en entête n'a pas besoin d'être distinctive si dans l'étape 64, on configure chaque contrôleur de réseau d'accès de façon à prendre comme valeur distinctive, la valeur d'un champ d'identité qui est extraite du message envoyé par le mobile à destination du réseau coeur auprès duquel le mobile s'enregistre. Lorsque le mobile place son identité permanente IMSI ou temporaire TMSI dans le corps du message à transmettre à un noeud de réseau coeur, le réseau coeur dispose généralement de fonctions protocolaires dédiées à l'extraction de cette identité permanente ou temporaire dans le corps de message puis à la reconnaissance des différents champs de l'identité. En étape 64, on installe aussi ces fonctions dédiées dans le contrôleur de réseau d'accès. On organise alors les fonctions dédiées installées de façon à ce que le contrôleur de réseau d'accès puisse lire la valeur distinctive par exemple dans les champs MCC et MNC de l'IMSI ou dans le champ NRI du TMSI.

Il n'est pas nécessaire non plus à la valeur en entête du message à transmettre, d'être distinctive si dans l'étape 64, on configure chaque contrôleur de réseau d'accès 47 de façon à mémoriser une correspondance entre d'une part, un identifiant local attribué par le contrôleur de réseau d'accès au mobile pour établir une connexion radio entre le mobile et ledit contrôleur, et d'autre part une identité permanente émise par le mobile à destination du contrôleur pour établir ladite connexion radio. On configure alors le contrôleur de réseau d'accès de façon à prendre comme valeur distinctive, la valeur d'un champ de l'identité permanente qui correspond à l'identifiant local pour un message émis par le mobile sur ladite connexion radio, à destination du réseau coeur auprès duquel le mobile est enregistré.

Le réseau de télécommunication obtenu par ce procédé, permet à un opérateur virtuel, d'utiliser le réseau d'accès radio géré par l'opérateur hôte. L'enseignement de l'invention ne se limite pas à un seul opérateur virtuel. On comprend que l'opérateur hôte peut héberger sur son réseau d'accès, plusieurs opérateurs virtuels. Pour héberger un opérateur virtuel supplémentaire, il convient en étape 62, d'ajouter en plus un noeud de réseau coeur de l'opérateur virtuel supplémentaire. En étape 63, le NRI comprend autant de bits que nécessaires pour distinguer l'opérateur hôte et chaque opérateur virtuel, par exemple trois bits suffisent pour distinguer un opérateur hôte et sept opérateurs virtuels en base deux. Les plages de valeurs de l'étape 64 sont réparties en conséquence. On peut prévoir à ce propos, sans que cela soit nécessaire, que l'opérateur hôte réserve une plage plus restreinte pour l'opérateur virtuel en se réservant une plage plus étendue à l'intérieure de laquelle il pourra ensuite réserver une plage supplémentaire pour un opérateur virtuel supplémentaire sans avoir à imposer à ou aux opérateurs virtuels antérieurs de repasser par l'étape 63 pour chaque opérateur virtuel supplémentaire. L'opérateur hôte, gérant le réseau d'accès, peut repasser par l'étape 64 autant de fois qu'il le souhaite pour configurer ses contrôleurs de réseau d'accès en conséquence.

Indépendamment du routage auquel l'invention apporte une solution, on comprend que l'étape 65 englobe d'autres actions conventionnelles telles que celles de configurer les mobiles de l'opérateur virtuel pour sélectionner le réseau d'accès de l'opérateur hôte, du point de vue radio, l'inscription des mobiles quant à elle, se faisant dans les noeuds de réseau coeur de l'opérateur virtuel. Les canaux de transmission radio, étant identiques pour l'opérateur hôte et pour l'opérateur virtuel, la vision des zones de localisation par les noeuds de réseau coeur de l'opérateur virtuel, dépend de la vision des zones de localisation par les noeuds de réseau coeur de l'opérateur hôte. L'opérateur virtuel MVNO doit configurer ses noeuds CN de façon adaptée à la topologie de l'opérateur hôte en termes de cellules et de zones de localisation.

La figure 6 montre un réseau de télécommunication cellulaire illustré avec la terminologie UMTS, technologie pour laquelle la fonction lu-Flex a été particulièrement définie. Le réseau de la figure 6 est produit en utilisant le procédé décrit en référence à la figure 5. A quelques différences mineures près, lu-Flex est aussi défini pour GSM et pour GPRS d'une façon analogue. De façon plus générale, on retient de l'enseignement de l'invention, d'utiliser les identifiants permanents et temporaires d'un mobile pour router les messages vers le bon réseau coeur dans une architecture qui consiste à interconnecter opérateur hôte et opérateur virtuel au niveau du réseau d'accès, ce tant pour UMTS/GSM/GPRS que pour d'autres réseaux cellulaires.

En référence à la figure 6, un mobile 59 utilise un canal de transmission radio sur une fréquence radio dans une zone géographique couverte par un node B 48. Le mobile 59 peut se déplacer vers d'autres zones géographiques couvertes par un node B 49, 53 ou 54.

Les contrôleurs de réseau d'accès du réseau d'accès sont ici représentés par un RNC 47 relié aux node B 48 et 49 et par un RNC 52 relié aux node B 53 et 54. Le réseau d'accès peut comprendre d'autres RNC et d'autres node B.

Le RNC 47 fait passer les communications qu'il contrôle, par une batterie de noeuds de réseau coeur 55 en domaine circuit et par une batterie de noeuds de réseau coeur 56 pour en domaine paquets. Le RNC 52 fait passer les communications qu'il contrôle, par une batterie de noeuds de réseau coeur 57 en domaine circuit et par une batterie de noeuds de réseau coeur 58 pour en domaine paquets.

Un MSC 30 avec son VLR dans la batterie de noeuds de réseau coeur 55, un SGSN 31 dans la batterie de noeuds de réseau coeur 56, un MSC 50 avec son VLR dans la batterie de noeuds de réseau coeur 57 et un SGSN 51 dans la batterie de noeuds de réseau coeur 58, constituent des noeuds d'un premier réseau coeur géré par un premier opérateur.

Un MSC 40 avec son VLR dans la batterie de noeuds de réseau coeur 55, un SGSN 41 dans la batterie de noeuds de réseau coeur 56, un MSC 60 avec son VLR dans la batterie de noeuds de réseau coeur 57 et un SGSN 61 dans la batterie de noeuds de réseau coeur 58, constituent des noeuds d'un deuxième réseau coeur géré par un deuxième opérateur.

Dans chaque batterie de noeuds de réseau coeur, un identificateur de ressource NRI est associé aux MSC 30, 50 et aux SGSN 31, 51, avec une première valeur par exemple égale à zéro. Un identificateur de ressource NRI est associé aux MSC 40, 60 et aux SGSN 41, 61, avec une deuxième valeur par exemple égale à un.

Lorsque le premier opérateur est un opérateur hôte et que le deuxième opérateur est un opérateur virtuel, le réseau de télécommunication de la figure 6, est typiquement un réseau produit par le procédé décrit en référence à la figure 5. Le premier et le deuxième opérateur peuvent aussi bien être de qualification identique sans avoir à changer fondamentalement le procédé de la figure 5. Le réseau d'accès peut très bien n'être géré ni par le premier, ni par le deuxième opérateur mais par un opérateur tiers. Le réseau d'accès peut aussi résulter d'une mise en commun des réseaux d'accès de chaque opérateur. On peut concevoir que, par exemple le RNC 47 soit géré par le premier opérateur et le RNC 52 soit géré par le deuxième opérateur, le premier opérateur étant opérateur hôte pour une première partie du réseau d'accès et opérateur virtuel pour une autre partie du réseau d'accès, le deuxième opérateur étant opérateur virtuel pour la première partie du réseau d'accès et opérateur hôte pour l'autre partie du réseau d'accès.

Que les deux opérateurs jouent un rôle symétrique ou non, la configuration des RNC ne change pas en soi. Le RNC 47 est agencé pour aiguiller au moyen de sa table de routage, tout message vers le noeud 30 ou vers le noeud 40 en fonction d'une valeur reçue du mobile 59. Différents agencements sont possibles tels que:
- Un agencement pour aiguiller un message avec en entête une image d'identité émise par le mobile 59, vers le noeud 30 pour une valeur d'image f(IMSI) comprise dans une première plage et vers le noeud 40 pour une valeur d'image f(IMSI) comprise dans une deuxième plage;
- Un agencement pour aiguiller un message avec en entête une image d'identité émise par le mobile 59, vers le noeud 30 pour une valeur d'image f(TMSI) qui contient un identificateur de ressource NRI du noeud 30 et vers le noeud 40 pour une valeur d'image f(TMSI) qui contient un identificateur de ressource NRI du noeud 40;
- Un agencement selon lequel le contrôleur de réseau d'accès comprend des moyens pour extraire une identité permanente de mobile, à l'intérieur d'un message émis par le mobile 59 à destination d'un réseau coeur et des moyens pour aiguiller le message vers le noeud 30 si la valeur contenue dans un champ de l'identité permanente, correspond à l'opérateur qui gère le noeud 30 et pour aiguiller le message vers le noeud 40 si la valeur contenue dans un champ de l'identité permanente, correspond à l'opérateur qui gère le noeud 40;
- Un agencement selon lequel le contrôleur de réseau d'accès comprend une table de correspondance entre un identifiant local de connexion radio avec le mobile 59 et une identité permanente de ce mobile dont un champ identifiant celui des opérateurs auprès duquel le mobile est abonné, donne une valeur émise par le mobile au moment de l'établissement de la connexion radio. Dans cet agencement, le contrôleur de réseau d'accès comprend des moyens pour aiguiller un message vers le noeud 30 si le message est reçu sur la connexion radio pour laquelle l'identifiant local correspond à l'identité permanente qui correspond à l'opérateur qui gère le noeud 30 et pour aiguiller le message vers le noeud 40 si le message est reçu sur la connexion radio pour laquelle l'identifiant local correspond à l'identité permanente qui correspond à l'opérateur qui gère le noeud 40.

Le RNC 52 est agencé de façon identique au RNC 47 pour aiguiller au moyen de sa table de routage, tout message vers le noeud 50 ou vers le noeud 60 en fonction d'une valeur reçue du mobile 59.

Que le RNC 52 soit géré ou pas par le même opérateur que le RNC 47, les MSC 30, 50 et les SGSN 31, 51, sont agencés pour allouer au mobile 59, un TMSI ou P-TMSI comprenant le NRI qui distingue les noeuds de réseau coeur du premier opérateur si le RNC 47, 52 aiguille vers eux un message du mobile 59 sans TMSI. De même, les MSC 40, 60 et les SGSN 41, 61, sont agencés pour allouer au mobile 59, un TMSI comprenant le NRI qui distingue les noeuds de réseau coeur du deuxième opérateur si le RNC 47, 52 aiguille vers eux un message du mobile 59 sans TMSI.

Dans la représentation de la figure 6, le NRI comprend un bit de première valeur pour le premier opérateur, et de deuxième valeur pour le deuxième opérateur.

Un partage par deux opérateurs de leurs réseaux d'accès respectifs leur permet de bénéficier de l'infrastructure d'un opérateur partenaire. Normalement, les identifiants temporaires TMSI ont une portée interne et les identifiants permanents IMSI ont une portée au moins partiellement interne à chaque opérateur. L'allocation des identifiants est alors concertée entre les deux opérateurs pour TMSI, P-TMSI et IMSI.

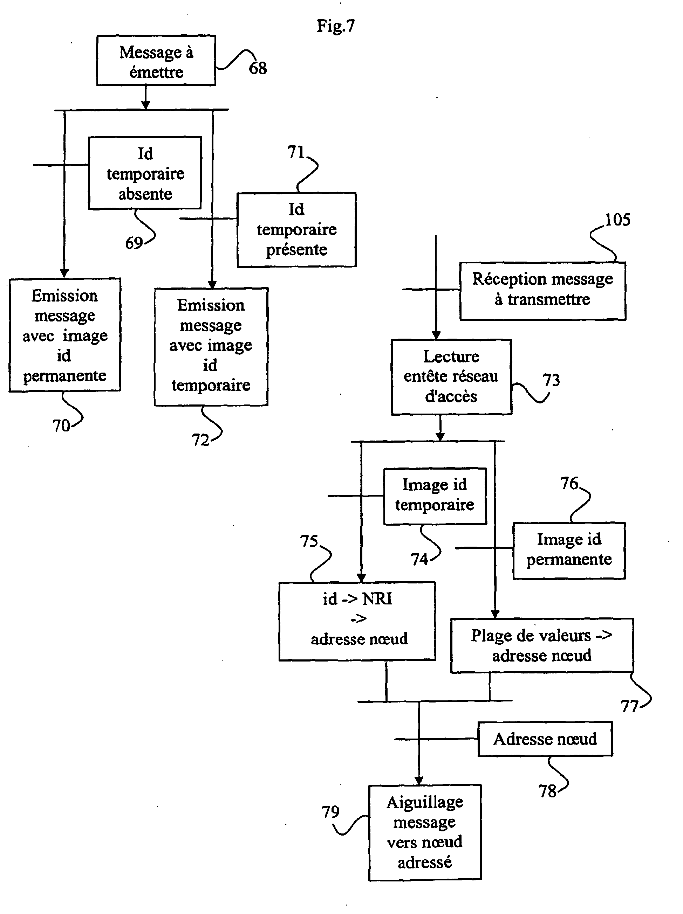

La figure 7 a pour but de décrire un procédé de télécommunication cellulaire qui utilise un réseau de télécommunication conforme à l'invention tel que celui de la figure 6.

Les étapes et transitions d'états 68 à 72 font partie des étapes exécutées habituellement par un mobile pour router la signalisation initiée par le mobile à destination du réseau coeur. Le routage est essentiellement nécessaire tant qu'il n'existe pas de connexion établie entre d'une part, le mobile et le réseau d'accès (AN en abrégé pour Access Network en anglais) et entre d'autre part l'AN et le réseau coeur (CN en abrégé pour Core Network en anglais). Le trafic usager, voix, données ou complément de signalisation, se fait ensuite de façon connue sur la connexion établie lorsqu'elle existe. Dans le cas GPRS où il n'existe qu'une connexion LLC établie entre le mobile et le SGSN mais pas entre le BSC et le SGSN, les étapes sont réitérées pour chaque trame RLC/MAC.

Dans l'étape 68, le mobile 59 génère un message à émettre pour effectuer la signalisation mobile vers CN. Il est rappelé que du point de vue radio, pour émettre son message, le mobile sélectionne préalablement le réseau d'accès radio de l'opérateur hôte.

La transition 69 correspond à une absence d'identité temporaire dans le mobile 59 qui active l'étape 70 à la suite de l'étape 68. La transition 71 correspond à une présence d'identité temporaire dans le mobile 59 qui active l'étape 72 à la suite de l'étape 68. L'identité temporaire est par exemple le TMSI en GSM ou en UMTS pour le mode circuit. L'identité temporaire est par exemple encore le P-TMSI en GPRS ou en UMTS pour le mode paquet.

Dans l'étape 70, le mobile 59 émet son message de signalisation avec une image d'identité permanente f(IMSI) vers le réseau d'accès AN.

Dans le cas du GSM en mode circuit, l'image d'identité permanente est l'identité internationale d'abonné complète IMSI elle-même qui se trouve en entête du message de signalisation à destination du réseau coeur en étant accessible au réseau d'accès.

Dans le cas du GPRS en mode paquet, le message de signalisation est émis avec une entête qui contient un nombre aléatoire à destination du réseau d'accès et un premier corps de message qui contient un message d'établissement de connexion à destination du réseau coeur CN. Le message d'établissement de connexion lui même comprend une entête qui contient le IMSI in extenso et un deuxième corps de message qui contient le paquet à transmettre au réseau coeur. L'image d'identité permanente se trouve ainsi encapsulée dans le message à destination du réseau coeur.

Dans le cas de l'UMTS, le message de signalisation est émis avec une entête qui contient l'IDNNS de la fonction lu-Flex et un corps de message destiné à être transmis au réseau coeur CN par le réseau d'accès AN. L'IDNNS est une image f(IMSI) qui ne constitue qu'une partie déduite de l'IMSI. Il y a alors un message de signalisation niveau réseau d'accès (IDT en abrégé pour Initial Direct Transfer en anglais) qui contient entre autre l'IDNNS et le message à destination du CN, respectant ainsi l'indépendance des couches utilisateur et réseau sans avoir à lire de partie transparente de signalisation. Il est rappelé que du point de vue radio, pour émettre son message, le mobile sélectionne préalablement le réseau d'accès radio de l'opérateur hôte.

Dans l'étape 72, le mobile 59 émet son message de signalisation avec une image d'identité temporaire vers le réseau d'accès AN.

Dans le cas du GSM en mode circuit, l'image d'identité temporaire est l'identité temporaire d'abonné complète TMSI elle-même qui se trouve en entête du message de signalisation de façon semblable à l'identité permanente.

Dans le cas du GPRS en mode paquet, les messages de signalisation et de trames de données sont émis avec une entête qui contient le TLLI constitué d'une partie de l'identité temporaire d'abonné en mode paquet complète P-TMSI.
Dans le cas de l'UMTS, le message de signalisation est émis avec une entête qui contient l'IDNNS de la fonction lu-Flex et un corps de message destiné à être transmis au réseau coeur CN par le réseau d'accès AN. En mode circuit, l'IDNNS est une image f(TMSI) qui ne constitue qu'une partie déduite du TMSI. En mode paquet, l'IDNNS est une image f(P-TMSI) qui ne constitue qu'une partie déduite du P-TMSI.

Les étapes et transitions d'états 73 à 79 ont pour fonction de faire router par l'AN, les messages initiaux de signalisation en GSM et en UMTS ou tout message en GPRS dans le sens mobile vers CN.

Le message émis par le mobile au moyen d'une connexion radio allouée par le contrôleur de réseau d'accès, est reçu par le contrôleur de réseau d'accès qui a alors en charge de l'aiguiller vers le noeud de réseau coeur de l'opérateur qui convient. La réception du message à transmettre valide une transition d'état 105 qui active l'étape 73.

Dans l'étape 73, le réseau d'accès, par exemple le RNC 47, lit l'entête du message en provenance du mobile 59 qui est accessible au réseau d'accès. En UMTS, il s'agit plus particulièrement de l'IDNNS alors qu'en GSM, il s'agit simplement de l'identité permanente ou temporaire elle-même, en GPRS, il s'agit plus particulièrement du TLLI. La valeur capturée dans cette étape permet de discriminer le réseau coeur géré par l'opérateur dont le mobile est autorisé à utiliser les services.

La transition 76 correspond à un IDNNS égal à une image d'IMSI en UMTS ou à l'IMSI lui-même en GSM. La transition 76 active l'étape 77 à la suite de l'étape 73. La transition 74 correspond à un IDNNS égal à une image de TMSI en UMTS ou au TMSI lui-même en GSM. La transition 74 active l'étape 75 à la suite de l'étape 73.

Dans l'étape 77, la plage de valeurs dans laquelle est contenue la valeur d'entête, permet au RNC de trouver directement une adresse de noeud de réseau coeur de l'opérateur auprès duquel le mobile est abonné, parmi des adresses associées à cette plage de valeur dans sa table de routage.

Dans l'étape 75, le contrôleur de réseau d'accès extrait directement le NRI de la valeur d'entête de façon à trouver dans sa table de routage, une adresse de noeud de réseau coeur de l'opérateur auprès duquel le mobile est enregistré, associée à ce NRI.

La transition 78, validée par la connaissance de l'adresse, active alors l'étape 79.

Dans l'étape 79, le contrôleur de réseau d'accès aiguille le message dans la batterie de noeuds de réseaux coeur auxquels il est relié, vers le noeud dont l'adresse a été trouvée dans sa table de routage.

Ce procédé de communication est particulièrement souple pour gérer la mobilité.

En cas de mobilité avec sélection d'un nouveau noeud CN par le noeud CN initial, le noeud initial ne peut sélectionner un noeud cible que dans son propre réseau coeur car il n'est pas connecté aux noeuds de réseau coeur du ou des autres opérateurs.

Un cas de mobilité avec sélection d'un nouveau noeud CN par le réseau d'accès est typiquement celui d'un changement de noeud CN hors communication. Supposons par exemple dans la figure 6 que le mobile 59, initialement dans le domaine de couverture du RNC 47, passe dans le domaine de couverture du RNC 52. Les étapes 73 à 79 qui auraient été initialement exécutées par le RNC 47, le sont naturellement par le RNC 52 qui reçoit alors le message avec IDNNS issu de l'ancien TMSI ou ancien TMSI lui-même en étape 73. Une même valeur d'identificateur de ressource NRI correspondant à un réseau coeur de même opérateur dans toute batterie, en étape 75, celle-ci amène naturellement le RNC 52 à aiguiller le message vers par exemple le MSC 50 ou respectivement le MSC 60 qui appartient au même réseau coeur que le MSC 30 ou respectivement le MSC 40. Le mobile 59 est alors répertorié dans le VLR associé du réseau coeur qui convient. Le comportement est identique avec un SGSN.

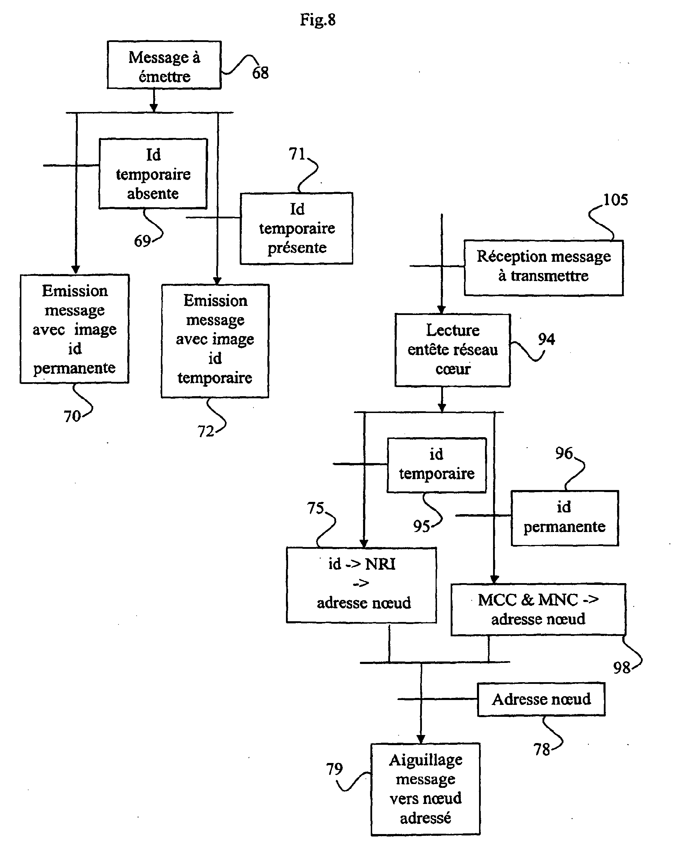

La figure 8 montre des étapes alternatives de procédé de télécommunication cellulaire conforme à l'invention. Les étapes 68 à 72 sont exécutées par le mobile de façon identique à la figure 7. Cependant, à la différence de la figure 7 où c'était l'entête habituellement accessible au réseau d'accès qui était exploitée, c'est l'entête habituellement accessible au réseau coeur qui est exploitée par le réseau d'accès.

Le message émis par le mobile au moyen d'une connexion radio allouée par le contrôleur de réseau d'accès, est reçu par le contrôleur de réseau d'accès qui a alors en charge de l'aiguiller vers le noeud de réseau coeur de l'opérateur qui convient. La réception du message à transmettre valide une transition d'état 105 qui active une étape 94.

Dans l'étape 94, le contrôleur de réseau d'accès extrait l'identité de mobile dans le corps de message. La capture de valeur distinctive se fait ici par lecture de l'identité dans l'entête réseau coeur qui se trouve dans le corps de message vu par le réseau d'accès. La valeur capturée dans cette étape permet de discriminer le réseau coeur géré par l'opérateur dont le mobile est autorisé à utiliser les services. Une transition 95 est validée si l'identité est l'identité temporaire TMSI. Une transition 96 est validée si l'identité est l'identité permanente IMSI.

La transition 95 valide l'étape 75 dans laquelle le contrôleur de réseau d'accès retrouve l'adresse de noeud de réseau à partir du NRI contenu dans le TMSI.

La transition 96 valide une étape 98 dans laquelle le contrôleur de réseau d'accès retrouve l'adresse de noeud de réseau à partir du code opérateur MNC et du code pays MCC contenus dans le IMSI.

Les étapes de procédé décrites en référence à la figure 8 sont surtout utiles lorsque la valeur d'entête accessible au réseau d'accès ne permet pas de reconnaître l'opérateur dont le mobile est autorisé à utiliser les services. C'est particulièrement lorsque le mobile ne possédant pas d'identité temporaire, envoie dans l'entête accessible au réseau d'accès, un nombre aléatoire dans le cas du GPRS, ou en itinérance, envoie une image d'identité permanente qui ne respecte pas les conventions fixées entre opérateurs pour exploiter un même réseau d'accès. Lorsque le mobile envoie une identité temporaire dans l'entête accessible au réseau d'accès, il n'est pas nécessaire de considérer la transition 95 car l'étape 75 peut très bien être activée par la transition 74 à la suite de l'étape 73.

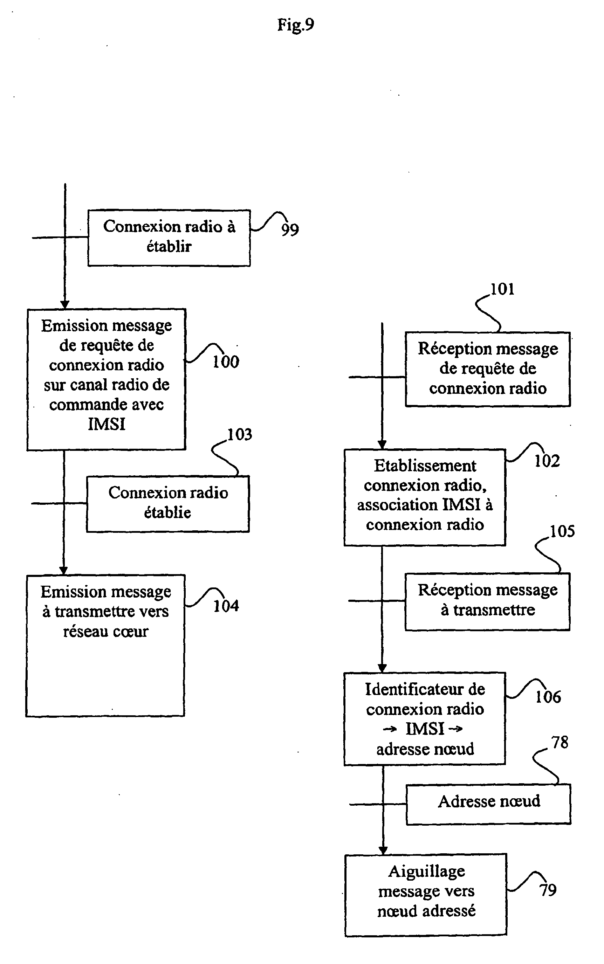

La figure 9 montre d'autres étapes alternatives de procédé de télécommunication cellulaire conforme à l'invention.

Une transition 99 commande au mobile d'établir une connexion radio de façon à pouvoir communiquer avec le réseau coeur auprès duquel le mobile est enregistré ou veut s'enregistrer. La transition 99 est par exemple activée par la mise en marche du mobile.

La transition 99 déclenche une étape 100 dans laquelle le mobile utilise un canal radio dit de commande montant, pour émettre un message de requête de connexion radio. De façon à s'identifier, le mobile place son identité permanente IMSI dans le message de requête qu'il émet en étape 100.

Une transition 101 est validée dans le contrôleur de réseau d'accès par une réception univoque de message de requête qui contient l'IMSI identifiant le mobile. La transition 101 déclenche une étape 102.

Dans l'étape 102, le contrôleur de réseau d'accès établit une connexion radio. Habituellement, le contrôleur de réseau d'accès attribue un identifiant local au mobile, par exemple RNTI en UMTS, de façon à répertorier la connexion radio définie pour chaque mobile.

Dans l'exécution de l'étape 102 par le contrôleur de réseau d'accès conformément à une première alternative de réalisation de l'invention, au moins une partie significative de l'IMSI telle que le MCC et le MNC, est associée à l'identificateur de connexion radio. Dans l'exécution de l'étape 102 par le contrôleur de réseau d'accès conformément à une deuxième alternative de réalisation de l'invention, au moins une partie significative de l'IMSI telle que le MCC et le MNC, est utilisée pour déterminer le coeur de réseau de l'opérateur qui autorise à un mobile possédant ce MCC et ce MNC, d'utiliser ses services de communication. Le contrôleur d'accès radio associe alors l'opérateur déterminé à un identificateur local de la connexion radio, c'est à dire à la connexion radio. L'association qui résulte de la première ou de la deuxième alternative de réalisation, est mémorisée dans le contrôleur de réseau d'accès au moins jusqu'à ce que le mobile fasse un accès avec identification par TMSI. On observe que cette étape permet de discriminer le réseau coeur par capture de la valeur distinctive qui résulte d'une lecture de l'identité permanente dans le message de requête.

Une transition 103 est validée dans le mobile lorsque le mobile a reçu les paramètres pour établir la connexion radio. La transition 103 valide une étape 104 de façon habituelle.

Dans l'étape 104, le mobile utilise de façon habituelle la connexion radio pour émettre un message à transmettre au réseau coeur.

Une transition 105, validée dans le contrôleur de réseau d'accès par une réception de message à transmettre, déclenche une étape 106.

Dans l'étape 106, dans la première alternative de réalisation, le contrôleur de réseau d'accès utilise l'association mémorisée entre l'identificateur de connexion radio et la partie significative de l'identité permanente IMSI pour déterminer dans la batterie, l'adresse du noeud du réseau coeur qui appartient à l'opérateur correspondant à l'IMSI du mobile. Dans la deuxième alternative de réalisation, le contrôleur de réseau d'accès utilise l'association mémorisée entre l'identificateur de connexion radio et l'opérateur déterminé en étape 102, pour déterminer dans la batterie, l'adresse du noeud du réseau coeur qui appartient à l'opérateur associé à la connexion radio.

La connaissance de l'adresse du noeud valide la transition 78 qui permet de poursuivre le procédé comme expliqué précédemment.

Pour résumer, l'enseignement essentiel de l'invention est d'utiliser, dans le réseau d'accès, une valeur envoyée par le mobile à destination du réseau d'accès ou du réseau coeur, pour aiguiller un message vers le réseau coeur distingué par cette valeur. Tout ou partie des étapes du procédé de communication peuvent être combinées.

Lorsque le mobile possède une identité temporaire allouée par un réseau coeur, l'image d'identité temporaire que le mobile envoie avec un message à transmettre au réseau coeur, au réseau d'accès en UMTS ou au réseau coeur en étant accessible au réseau d'accès en GSM ou en GPRS, permet au contrôleur de réseau d'accès, d'aiguiller le message vers le réseau coeur qui convient grâce à l'identification de noeud de réseau coeur contenue dans l'image d'identité temporaire habituellement lisible par le réseau d'accès.

Lorsque le mobile ne possède pas d'identité temporaire, l'image d'identité permanente que le mobile envoie avec un message à transmettre au réseau coeur, au réseau d'accès en UMTS ou au réseau coeur en étant accessible au réseau d'accès en GSM, permet au contrôleur de réseau d'accès, d'aiguiller le message vers le réseau coeur qui convient, en reconnaissant pour ce réseau coeur, une plage de valeurs qui couvre l'image d'identité permanente habituellement lisible par le réseau d'accès. L'identité permanente extraite du message à transmettre par le contrôleur de réseau d'accès, ou l'association d'une connexion radio pour le message à transmettre qui a été établie à réception de l'identité permanente par le réseau d'accès, permet au contrôleur de réseau d'accès, d'aiguiller le message vers le réseau coeur sans avoir à reconnaître une plage de valeurs qui couvre l'image d'identité permanente. C'est par exemple le cas en GPRS lorsque le mobile joint un nombre aléatoire au message à transmettre ou en UMTS lorsque le mobile possède simplement un accord d'itinérance avec le réseau coeur qui convient.

On notera que les exemples de réalisation de l'invention ne nécessite aucune configuration particulière du mobile. Le mobile envoie de façon habituelle une valeur qui est une image de l'identité temporaire reçue du réseau coeur ou de l'identité permanente qui est sur sa carte SIM. La valeur distinctive de l'image d'identité temporaire résulte de la configuration préalable du réseau coeur. La valeur distinctive de l'image d'identité permanente résulte d'accords internationaux pour attribuer des identificateurs de pays et d'opérateurs ou d'accords entre opérateurs pour attribuer des plages de valeurs.

On comprendra cependant que d'autres modes de réalisation restent dans la portée des revendications. C'est le cas entre autres pour un mobile qui serait configuré de façon à envoyer non pas un nombre totalement aléatoire en GPRS mais un nombre pseudo-aléatoire qui constituerait une valeur distinctive d'opérateur, par exemple par une plage de valeurs dans laquelle il serait compris ou par une concaténation d'identificateur d'opérateur au nombre aléatoire généralement généré.

## Revendications

1. Procédé de production d'un réseau de télécommunication cellulaire permettant à un opérateur dit virtuel qui ne possède pas de réseau d'accès radio, d'utiliser un réseau d'accès radio géré par un opérateur dit hôte, ledit réseau d'accès radio comprenant des contrôleurs de réseau d'accès (47,52) reliés à au moins un noeud de réseau coeur de l'opérateur hôte, procédé **caractérisé en ce qu'**il comprend:
- une étape de construction (62) dans laquelle on déploie des batteries de noeuds de réseau coeur en plaçant dans chaque batterie (55), au moins un noeud de réseau coeur (30) de l'opérateur hôte avec au moins un noeud de réseau coeur (40) de l'opérateur virtuel, en associant un ou plusieurs contrôleurs de réseau d'accès à chaque batterie et en reliant les contrôleurs de réseau d'accès à tous les noeuds de réseau coeur de la batterie à laquelle ils sont associés;
- une première étape de configuration (64) dans laquelle on configure chaque contrôleur de réseau d'accès (47) relié aux noeuds de coeurs de réseau d'une même batterie (55) de façon à aiguiller des messages reçus d'un mobile de communication sur une fréquence de l'opérateur hôte, soit vers un noeud de réseau coeur de l'opérateur hôte, soit vers un noeud de réseau coeur de l'opérateur virtuel, en fonction d'une valeur que le mobile émet vers le réseau d'accès pour s'identifier, ladite valeur étant distinctive pour l'opérateur hôte et pour l'opérateur virtuel.

2. Procédé de production selon la revendication 1, **caractérisé en ce que**, pour permettre au mobile d'émettre une valeur qui est une image d'identité permanente, une première plage de valeurs est réservée à l'opérateur hôte de façon à couvrir l'image d'identité permanente lorsque le mobile est abonné auprès de l'opérateur hôte et une deuxième plage de valeurs est réservée à l'opérateur virtuel de façon à couvrir l'image d'identité permanente ou le nombre pseudo-aléatoire lorsque le mobile est abonné auprès de l'opérateur virtuel.

3. Procédé de production selon la revendication 1, **caractérisé en ce que** dans une deuxième étape de configuration (63), on attribue à chaque noeud de réseau coeur dans chaque batterie, un identificateur de ressource distinctif de l'opérateur hôte et de l'opérateur virtuel et on configure chaque noeud de réseau coeur dans chaque batterie de façon à ce que toute identité temporaire attribuée et envoyée par ce noeud à un mobile de communication, comprenne l'identificateur de ressource de sorte que lorsque la valeur émise par le mobile de communication pour s'identifier, est une image de l'identité temporaire, cette valeur comprenant l'identificateur de ressource, est distinctive pour l'opérateur hôte et pour l'opérateur virtuel.

4. Procédé de production selon la revendication 3, **caractérisé en ce que** dans la deuxième étape de configuration (63), on attribue un identificateur de ressource de même valeur dans toutes les batteries pour chaque opérateur.

5. Procédé de production selon la revendication 3, **caractérisé en ce que** chaque batterie (55) comprend deux noeuds de réseau coeur (30,40) et **en ce que** l'identificateur de ressource est un bit de premier état pour l'opérateur hôte et de deuxième état pour l'opérateur virtuel.

6. Procédé de production selon la revendication 1, **caractérisé en ce que** dans la première étape de configuration (64), on configure chaque contrôleur de réseau d'accès (47) de façon à prendre comme valeur distinctive, la valeur d'un champ d'une identité permanente qui est extraite d'un message envoyé par le mobile à destination du réseau coeur auprès duquel le mobile est abonné ou auprès duquel le mobile veut s'enregistrer.

7. Procédé de production selon la revendication 1, **caractérisé en ce que** dans la première étape de configuration (64), on configure chaque contrôleur de réseau d'accès (47) de façon à mémoriser une correspondance entre d'une part, un identifiant local attribué par le contrôleur de réseau d'accès au mobile pour établir une connexion radio entre le mobile et ledit contrôleur, et d'autre part tout ou partie d'une identité permanente émise par le mobile à destination du dit contrôleur pour établir ladite connexion radio, et de façon à prendre comme valeur distinctive, la valeur d'un champ de l'identité permanente qui correspond à l'identifiant local pour un message émis par le mobile sur ladite connexion radio, à destination du réseau coeur auprès duquel le mobile est abonné ou auprès duquel le mobile veut s'enregistrer, ou et d'autre part le réseau coeur déduit d'un champ de l'identité permanente émise par le mobile à destination du dit contrôleur pour établir ladite connexion radio.

8. Réseau de télécommunication cellulaire comprenant un premier réseau coeur géré par un premier opérateur et qui comprend des noeuds de réseau coeur (30,31,50,51), organisés par batteries de noeuds de réseau coeur (55,56,57,58) et un réseau d'accès radio qui comprend des contrôleurs de réseau d'accès (47,52), chacun relié à une ou plusieurs batteries, **caractérisé en ce qu'**il comprend un deuxième réseau coeur géré par un deuxième opérateur et qui comprend des noeuds de réseau coeur (40,41,60,61), répartis dans les batteries (55,56,57,58) de façon à ce que les contrôleurs de réseau d'accès soient reliés à au moins un noeud du deuxième réseau coeur, les contrôleurs de réseau d'accès étant agencés pour aiguiller vers un noeud du premier ou du deuxième réseau coeur, un message émis par un mobile de communication, en fonction d'une valeur reçue du mobile de communication par le contrôleur pour l'identification du mobile, ladite valeur étant distinctive du premier et du deuxième opérateur.

9. Réseau de télécommunication selon la revendication 8, **caractérisé en ce que** ladite valeur est distinctive par son appartenance à une première plage de valeurs réservée au premier opérateur, ou à une deuxième plage de valeur réservée au deuxième opérateur.

10. Réseau de télécommunication selon la revendication 8, **caractérisé en ce que** ladite valeur est distinctive par son contenu d'un identificateur de ressource qui distingue, dans chaque batterie, les noeuds selon qu'ils sont du premier ou du deuxième réseau coeur.

11. Réseau de télécommunication selon la revendication 10, **caractérisé en ce qu'**il existe un identificateur de ressource identique dans toutes les batteries pour chaque opérateur.

12. Réseau de télécommunication selon la revendication 10, **caractérisé en ce que** chaque batterie (57,58) comprend un noeud de réseau coeur (50,60,51,61) de chaque opérateur et **en ce que** l'identificateur de ressource comprend un bit de premier état pour le premier opérateur et de deuxième état pour le deuxième opérateur.

13. Réseau de télécommunication selon la revendication 8, **caractérisé en ce que** le contrôleur de réseau d'accès comprend des moyens pour extraire une identité permanente de mobile, à l'intérieur d'un message émis par le mobile à destination d'un réseau coeur et des moyens pour prendre comme valeur distinctive, celle contenue dans un champ de l'identité permanente qui identifie celui des opérateurs auprès duquel le mobile est abonné.

14. Réseau de télécommunication selon la revendication 8, **caractérisé en ce que** le contrôleur de réseau d'accès comprend des moyens pour mémoriser une association entre un identifiant local de connexion radio avec un mobile et tout ou partie d'une identité permanente de ce mobile dont un champ identifiant celui des opérateurs auprès duquel le mobile est abonné, donne ladite valeur distinctive ou pour mémoriser une association entre un identifiant local de connexion radio avec un mobile et un réseau coeur déduit de tout ou partie d'une identité permanente de ce mobile dont un champ identifiant celui des opérateurs auprès duquel le mobile est abonné, donne ladite valeur distinctive.

15. Réseau de télécommunication selon l'une des revendications 10 à 12, **caractérisé en ce que** chaque réseau coeur comprend des moyens pour inclure ledit identificateur de ressource dans toute identité temporaire attribuée et envoyée à un mobile de communication par un noeud du réseau coeur.

16. Procédé de télécommunication cellulaire au moyen de contrôleurs (47,52) d'un réseau d'accès radio et d'un mobile (59) autorisé à utiliser des **caractérisé en ce qu'**il comprend:
- au moins une étape de discrimination (73,94,102) dans laquelle un contrôleur de réseau d'accès capture une valeur émise par un mobile (59), autorisé à utiliser des services de communication d'un premier opérateur qui gère un premier réseau coeur ou d'un deuxième opérateur qui gère un deuxième réseau coeur, pour s'identifier, ladite valeur étant distinctive pour le réseau coeur géré par l'opérateur dont le mobile est autorisé à utiliser les services de communication,
- une étape d'aiguillage (79) dans laquelle ledit contrôleur ayant reçu du mobile un message à transmettre à un réseau coeur, aiguille ledit message dans une batterie de noeuds de premier et de deuxième réseaux coeur auxquels ledit contrôleur est relié, vers un noeud du premier réseau coeur ou vers un noeud du deuxième réseau coeur en fonction de ladite valeur distinctive.

17. Procédé de télécommunication selon la revendication 16, **caractérisé en ce qu'**il comprend:
- une étape de discrimination (73) dans laquelle le contrôleur de réseau capture ladite valeur par lecture dans une entête du message à transmettre;
- une étape (75) activée lorsque le contrôleur de réseau d'accès détecte que ladite valeur distinctive est une image d'identité temporaire, et dans laquelle ledit contrôleur extrait de l'image d'identité temporaire, un identificateur de ressource pour trouver une adresse de noeud de réseau coeur vers lequel aiguiller le message en étape d'aiguillage (79);
- une étape (77) activée lorsque le contrôleur de réseau d'accès détecte que ladite valeur distinctive est une image d'identité permanente, et dans laquelle ledit contrôleur utilise une plage de valeurs dans laquelle est contenue l'image d'identité permanente pour trouver une adresse de noeud de réseau coeur vers lequel aiguiller le message en étape d'aiguillage (79).

18. Procédé de télécommunication selon la revendication 16, **caractérisé en ce qu'**il comprend:
- une étape de discrimination (94) dans laquelle le contrôleur de réseau d'accès capture ladite valeur distinctive par lecture dans un corps du message à transmettre au réseau coeur;
- une étape (98) activée lorsque le contrôleur de réseau d'accès détecte que ladite valeur distinctive est une image d'identité permanente, et dans laquelle ledit contrôleur utilise un code pays et un code opérateur contenus dans l'image d'identité permanente pour trouver une adresse de noeud de réseau coeur vers lequel aiguiller le message en étape d'aiguillage (79).

19. Procédé de télécommunication selon la revendication 17, **caractérisé en ce que** l'identificateur de ressource permet de trouver une adresse de noeud de même réseau coeur dans toute batterie.

20. Procédé de télécommunication selon la revendication 16, **caractérisé en ce qu'**il comprend une étape de discrimination (102) dans laquelle le contrôleur de réseau d'accès capture la valeur distinctive par lecture d'une identité permanente dans un message de requête émis par le mobile pour établir une connexion radio, établit la connexion radio et associe à la connexion radio établie, soit tout ou partie de l'identité permanente comprenant au moins le champ qui identifie celui des opérateurs auprès duquel le mobile est abonné, soit un réseau coeur déterminé en utilisant une partie significative de ladite identité permanente, de façon à déduire soit du tout ou partie de l'identité permanente associée à la connexion radio, soit du réseau coeur associé à la connexion radio, une adresse de noeud de réseau coeur vers lequel aiguiller le message en étape d'aiguillage (79).

21. Contrôleur de réseau d'accès (47,52) destiné à un réseau d'accès radio pour contrôler l'accès d'un mobile (59) autorisé à utiliser des services de communication d'un premier opérateur qui gère un premier réseau coeur ou d'un deuxième opérateur qui gère un deuxième réseau coeur, **caractérisé en ce qu'**il comprend :
- au moins un moyen de discrimination pour capturer une valeur émise par le mobile pour s'identifier, ladite valeur étant distinctive pour le réseau coeur géré par l'opérateur dont le mobile est autorisé à utiliser les services de communication.
- un moyen d'aiguillage, ledit contrôleur ayant reçu du mobile un message à transmettre à un réseau coeur, pour aiguiller ledit message dans une batterie de noeuds de premier et de deuxième réseaux coeur auxquels ledit contrôleur est relié, vers un noeud du premier réseau coeur ou vers un noeud du deuxième réseau coeur en fonction de ladite valeur distinctive.

## Claims

1. Method of producing a cellular telecommunication network allowing a so-called virtual operator, who does not have a radio access network, to use a radio access network managed by a so-called host operator, the said radio access network comprising access network controllers (47, 52) connected to at least one core network node of the host operator, this method being **characterized in that** it comprises:
- a construction step (62) in which banks of core network nodes are deployed by placing in each bank (55) at least one core network node (30) of the host operator with at least one core network node (40) of the virtual operator, by associating one or more access network controllers with each bank and by connecting the access network controllers to all of the core network nodes of the bank with which they are associated;
- a first configuration step (64) in which each access network controller (47) connected to the network core nodes of a same bank (55) are configured in such a way as to route messages received from a communication mobile on a host operator frequency, either to a core network node of the host operator or to a core network node of the virtual operator, depending on a value that the mobile transmits to the access network in order to identify itself, the said value being distinctive for the host operator and for the virtual operator.

2. Production method according to Claim 1, **characterized in that**, in order to allow the mobile to transmit a value which is a permanent identity image, a first range of values is reserved for the host operator in such a way as to cover the permanent identity image when the mobile is subscribed to the host operator and a second range of values is reserved for the virtual operator in such a way as to cover the permanent identity image or the pseudo-random number when the mobile is subscribed to the virtual operator.

3. Production method according to Claim 1, **characterized in that** in a second configuration step (63), each core network node in each bank is allocated a distinctive resource identifier of the host operator and of the virtual operator and each core network node in each bank is configured in such a way that any temporary identity attributed and sent by this node to a communication mobile comprises the resource identifier such that when the value transmitted by the communication mobile in order to identify itself is an image of the temporary identity, that value comprising the resource identifier, is distinctive for the host operator and for the virtual operator.

4. Production method according to Claim 3, **characterized in that** in the second configuration step (63), a resource identifier of the same value is attributed in all the banks for each operator.

5. Production method according to Claim 3, **characterized in that** each bank (55) comprises two core network nodes (30, 40) and **in that** the resource identifier is a bit in a first state for the host identifier and in a second state for the virtual operator.

6. Production method according to Claim 1, **characterized in that** in the first configuration step (64), each access network controller (47) is configured in such away as to take as a distinctive value the value of a field of a permanent identity which is extracted from a message sent by the mobile to the core network to which the mobile is subscribed or with which the mobile wishes to register.

7. Production method according to Claim 1, **characterized in that** in the first configuration step (64) each access network controller (47) is configured in such a way as to store a correspondence between on the one hand a local identifier allocated by the access network controller to the mobile in order to establish a radio connection between the mobile and the said controller and, on the other hand, all or part of a permanent identity transmitted by the mobile to the said controller in order to establish the said radio connection, and in such a way as to take as a distinctive value the value of a field of the permanent identity which corresponds to the local identifier for a message transmitted by the mobile, on the said radio connection, to the core network to which the mobile is subscribed or with which the mobile wishes to register, and on the other hand the core network derived from a field of the permanent identity transmitted by the mobile to the said controller in order to establish the said radio connection.

8. Cellular telecommunication network comprising a first core network managed by a first operator and which comprises core network nodes (30, 31, 50, 51), organized in banks of core network nodes (55, 56 ,57, 58) and a radio access network which comprises access network controllers (47, 52), each connected to one or more banks, **characterized in that** it comprises a second core network managed by a second operator and which comprises core network nodes (40, 41, 60, 61), distributed in the banks (55, 56, 57, 58) in such a way that the access network controllers are connected to at least one node of the second core network, the access network controllers being arranged to route a message transmitted by a communication mobile to a node of the first or of the second core network, depending on a value received from the communication mobile by the controller for the identification of the mobile, the said value being distinctive of the first and of the second operator.

9. Telecommunication network according to Claim 8, **characterized in that** the said value is distinctive by belonging to a first range of values reserved for the first operator, or to a second range of values reserved for the second operator.

10. Telecommunication network according to Claim 8, **characterized in that** the said value is distinctive by its content of a resource identifier which distinguishes, in each bank, the nodes according to whether they are of the first or second core network.

11. Telecommunication network according to Claim 10, **characterized in that** there is an identical resource identifier in all of the banks for each operator.

12. Telecommunication network according to Claim 10, **characterized in that** each bank (57, 58) comprises a core network node (50, 60, 51, 61) of each operator and **in that** the resource identifier comprises a bit in a first state for the first operator and in a second state for the second operator.

13. Telecommunication network according to Claim 8, **characterized in that** the access network controller comprises means for extracting a permanent mobile identity, from within a message transmitted by the mobile to a core network and means for taking as a distinctive value the one contained in a permanent identify field which identifies which one of the operators the mobile is subscribed to.

14. Telecommunication network according to Claim 8, **characterized in that** the access network controller comprises means for storing an association between a local identifier of radio connection with a mobile and all or part of a permanent identity of that mobile of which a field identifying which one of the operators the mobile is subscribed to gives the said distinctive value or for storing an association between an identifier of local radio connection with a mobile and a core network derived from all or part of a permanent identity of that mobile of which a field identifying which one of the operators the mobile is subscribed to gives the said distinctive value.

15. Telecommunication network according to one of Claims 10 to 12, **characterized in that** each core network comprises means for including the said resource identifier in any temporary identifier allocated and sent to a communication mobile by a node of the core network.

16. Method of cellular telecommunication by means of controllers (47, 52) of a radio access network **characterized in that** it comprises:
- at least one discrimination step (73, 94, 102) in which an access network controller captures a value transmitted by a mobile (59), authorized to use communication services of a first operator which manages a first core network or of a second operator which manages a second core network, in order to identify itself, the said value being distinctive for the core network managed by the operator of which the mobile is authorized to use the communication services,
- a routing step (79) in which the said controller, having received from the mobile a message to be transmitted to a core network, routes the said message, in a bank of nodes of first and second core networks to which the said controller is connected, to a node of the first core network or to a node of the second core network depending on the said distinctive value.

17. Telecommunication method according to Claim 16, **characterized in that** it comprises:
- a discrimination step (73) in which the network controller captures the said value by reading in the header of the message to be transmitted;
- a step (75) activated when the access network controller detects that the said distinctive value is a temporary identity image, and in which the said controller extracts from the temporary identity image a resource identifier in order to find a core network node address to which the message is to be routed in a routing step (79);
- a step (77) activated when the access network controller detects that the said distinctive value is a permanent identity image, and in which the said controller uses a range of values in which is contained the permanent identity image in order to find a core network node address to which the message is to be routed in a routing step (79).

18. Telecommunication method according to Claim 16, **characterized in that** it comprises:
- a discrimination step (94) in which the access network controller captures the said distinctive value by reading in the body of the message to be transmitted to the core network,
- a step (98) activated when the access network controller detects that the said distinctive value is a permanent identity image, and in which the said controller uses a country code and an operator code contained in the permanent identity image in order to find a core network node address to which the message is to be routed in a routing step (79).

19. Telecommunication method according to Claim 17, **characterized in that** the resource identifier makes it possible to find a node address of the same core network in any bank.

20. Telecommunication method according to Claim 16, **characterized in that** it comprises a discrimination step (102) in which the access network controller captures the distinctive value by reading a permanent identity in a request message transmitted by the mobile in order to establish a radio connection, establishes the radio connection and associates with the established radio connection either all or part of the permanent identity comprising at least the field which identifies which one of the operators the mobile is subscribed to, or a core network determined by using a significant part of the said permanent identity, in such a way as to derive from either all or part of the permanent identity associated with the radio connection, or from the core network associated with the radio connection, a core network node address to which the message is to be routed in a routing step (79).

21. Access network controller (47, 52) intended for a radio access network for controlling access of a mobile (59) authorized to use communication services of a first operator which manages a first core network or of a second operator which manages a second core network, **characterized in that** it comprises:
- at least one means of discrimination in order to capture a value transmitted by the mobile in order to identify itself, the said value being distinctive for the core network managed by the operator of which the mobile is authorized to use the communication services,
- a routing means, the said controller having received from the mobile a message to be transmitted to a core network, in order to route the said message, in a bank of nodes of first and second core networks to which the said controller is connected, to a node of the first core network or to a node of the second core network depending on the said distinctive value.

## Patentansprüche

1. Verfahren zum Herstellen eines Zellentelekommunikationsnetzes, das einem so genannten virtuellen Betreiber, der kein Funkzugriffsnetz besitzt, ermöglicht, ein Funkzugriffsnetz zu verwenden, das von einem so genannten Host-Betreiber gesteuert wird, wobei das Funkzugriffsnetz Zugriffsnetz-Controller (47, 52) aufweist, die mit wenigstens einem Kernnetzknoten des Host-Betreibers verbunden sind, wobei das Verfahren **dadurch gekennzeichnet ist, dass** es enthält:
- einen Konstruktionsschritt (62), in dem Batterien von Kernnetzknoten ausgebreitet werden, indem in jeder Batterie (55) wenigstens ein Kernnetzknoten (30) des Host-Betreibers mit wenigstens einem Kernnetzknoten (40) des virtuellen Betreibers angeordnet wird, indem ein oder mehrere Zugriffsnetz-Controller jeder Batterie zugewiesen werden und indem die Zugriffsnetz-Controller mit allen Kernnetzknoten der Batterie, der sie zugeordnet sind, verbunden werden;
- einen ersten Konfigurationsschritt (64), in dem jeder Zugriffsnetz-Controller (47), der mit den Kernnetzknoten derselben Batterie (55) verbunden ist, in der Weise konfiguriert wird, dass Nachrichten, die von einem mobilen Kommunikationsgerät auf einer Frequenz des Host-Betreibers empfangen werden, in Abhängigkeit von einem Wert, den das mobile Endgerät zu dem Zugriffsnetz aussendet, um sich zu identifizieren, entweder zu einem Kernnetzknoten des Host-Betreibers oder zu einem Kernnetzknoten des virtuellen Betreibers geleitet werden, wobei der Wert für den Host-Betreiber und für den virtuellen Betreiber unterschiedlich ist.

2. Herstellungsverfahren nach Anspruch 1, **dadurch gekennzeichnet, dass**, um einem mobilen Gerät zu ermöglichen, einen Wert auszusenden, der ein Bild einer permanenten Identität ist, ein erster Wertebereich für den Host-Betreiber reserviert wird, derart, dass das Bild einer permanenten Identität abgedeckt ist, wenn das mobile Gerät bei dem Host-Betreiber abonniert ist, und ein zweiter Wertebereich für den virtuellen Betreiber reserviert wird, derart, dass das Bild der permanenten Identität oder die Pseudozufallszahl abgedeckt wird, wenn das mobile Gerät bei dem virtuellen Betreiber abonniert ist.

3. Herstellungsverfahren nach Anspruch 1, **dadurch gekennzeichnet, dass** in einem zweiten Konfigurationsschritt (63) jedem Kernnetzknoten in jeder Batterie ein Betriebsmittelidentifizierer zugewiesen wird, der für den Host-Betreiber und den virtuellen Betreiber verschieden ist, und jeder Kernnetzknoten in jeder Batterie in der Weise konfiguriert wird, dass jede temporäre Identität, die von diesem Knoten einem mobilen Kommunikationsgerät zugewiesen wird und zu diesem geschickt wird, den Betriebsmittelidentifizierer enthält, derart, dass dann, wenn der Wert, der von dem mobilen Kommunikationsgerät ausgesendet wird, um sich zu identifizieren, ein Bild einer temporären Identität ist, dieser Wert, der den Betriebsmittelidentifizierer enthält, für den Host-Betreiber und für den virtuellen Betreiber unterschiedlich ist.

4. Herstellungsverfahren nach Anspruch 3, **dadurch gekennzeichnet, dass** in dem zweiten Konfigurationsschritt (63) in allen Batterien für jeden Betreiber ein Betriebsmittelidentifizierer mit demselben Wert zugewiesen wird.

5. Herstellungsverfahren nach Anspruch 3, **dadurch gekennzeichnet, dass** jede Batterie (55) zwei Kernnetzknoten (30, 40) enthält und dass der Betriebsmittelidentifizierer ein Bit ist, das für den Host-Betreiber im ersten Zustand ist und für den virtuellen Betreiber im zweiten Zustand ist.

6. Herstellungsverfahren nach Anspruch 1, **dadurch gekennzeichnet, dass** im ersten Konfigurationsschritt (64) jeder Zugriffsnetz-Controller (47) in der Weise konfiguriert wird, dass als unterschiedlicher Wert der Wert eines Feldes einer permanenten Identität genommen wird, der aus einer Nachricht extrahiert wird, die von dem mobilen Gerät zu dem Kernnetz geschickt wird, bei dem das mobile Gerät abonniert ist oder bei dem sich das mobile Gerät registrieren will.

7. Herstellungsverfahren nach Anspruch 1, **dadurch gekennzeichnet, dass** in dem ersten Konfigurationsschritt (64) jeder Zugriffsnetz-Controller (47) in der Weise konfiguriert wird, dass eine Korrespondenz zwischen einerseits einem lokalen Identifizierer, der durch den Zugriffsnetz-Controller dem mobilen Gerät zugewiesen wird, um eine Funkverbindung zwischen dem mobilen Gerät und dem Controller herzustellen, und andererseits einer gesamten permanenten Identität oder einem Teil hiervon, die von dem mobilen Gerät zu dem Controller ausgesendet wird, um die Funkverbindung herzustellen, gespeichert wird, und in der Weise konfiguriert wird, dass als unterschiedlicher Wert der Wert eines Feldes der permanenten Identität, die dem lokalen Identifizierer entspricht, für eine Nachricht genommen wird, die von dem mobilen Gerät auf der Funkverbindung zu dem Kernnetz, bei dem das mobile Gerät abonniert ist oder bei dem sich das mobile Gerät registrieren möchte, ausgesendet wird oder, und andererseits, das Kernnetz aus einem Feld einer permanenten Identität ableitet, das von dem mobilen Gerät zu dem Controller ausgesendet wird, um die Funkverbindung herzustellen.

8. Zellentelekommunikationsnetz, das ein erstes Kernnetz, das von einem ersten Betreiber gesteuert wird und das Kernnetzknoten (30, 31, 50, 51) enthält, die in Batterien von Kernnetzknoten (55, 56, 57, 58) organisiert sind, und ein Funkzugriffsnetz, das Zugriffsnetz-Controller (47, 52) enthält, wovon jeder mit einer oder mit mehreren Batterien verbunden ist, aufweist, **dadurch gekennzeichnet, dass** es ein zweites Kernnetz enthält, das von einem zweiten Betreiber gesteuert wird und das Kernnetzknoten (40, 41, 60, 61) enthält, die in den Batterien (55, 56, 57, 58) in der Weise verteilt sind, dass die Zugriffsnetz-Controller mit wenigstens einem Knoten des zweiten Kernnetzes verbunden sind, wobei die Zugriffsnetz-Controller dazu ausgelegt sind, eine Nachricht, die von einem mobilen Kommunikationsgerät ausgesendet wird, in Abhängigkeit von einem Wert, der durch den Controller von dem mobilen Kommunikationsgerät empfangen wird, um das mobile Gerät zu identifizieren, entweder zu einem Knoten des ersten oder des zweiten Kernnetzes zu leiten, wobei der Wert für den ersten und für den zweiten Betreiber unterschiedlich ist.

9. Telekommunikationsnetz nach Anspruch 8, **dadurch gekennzeichnet, dass** der Wert durch seine Zugehörigkeit zu einem ersten Wertebereich, der für den ersten Betreiber reserviert ist, oder zu einem zweiten Wertebereich, der für den zweiten Betreiber reserviert ist, unterschieden ist.

10. Telekommunikationsnetz nach Anspruch 8, **dadurch gekennzeichnet, dass** der Wert durch seinen Inhalt eines Betriebsmittelidentifizierers unterschieden ist, der in jeder Batterie die Knoten danach unterscheidet, ob sie zum ersten oder zum zweiten Kernnetz gehören.

11. Telekommunikationsnetz nach Anspruch 10, **dadurch gekennzeichnet, dass** ein Betriebsmittelidentifizierer vorhanden ist, der in allen Batterien für jeden Betreiber gleich ist.

12. Telekommunikationsnetz nach Anspruch 10, **dadurch gekennzeichnet, dass** jede Batterie (57, 58) einen Kernnetzknoten (50, 60, 51, 61) jedes Betreibers enthält und dass der Betriebsmittelidentifizierer ein Bit enthält, das für den ersten Betreiber im ersten Zustand ist und für den zweiten Betreiber im zweiten Zustand ist.

13. Telekommunikationsnetz nach Anspruch 8, **dadurch gekennzeichnet, dass** der Zugriffsnetz-Controller Mittel enthält, um eine permanente Identität des mobilen Geräts aus einer Nachricht zu extrahieren, die von dem mobilen Gerät zu einem Kernnetz ausgesendet wird, und Mittel enthält, um als unterschiedlichen Wert jenen zu nehmen, der in einem Feld der permanenten Identität enthalten ist, die jenen der Betreiber identifiziert, bei dem das mobile Gerät abonniert ist.

14. Telekommunikationsnetz nach Anspruch 8, **dadurch gekennzeichnet, dass** der Zugriffsnetz-Controller Mittel enthält, um eine Zuordnung zwischen einem lokalen Identifizierer der Funkverbindung und einem mobilen Gerät und einer gesamten permanenten Identität oder einem Teil hiervon dieses mobilen Geräts, wovon ein Feld, das jenen der Betreiber identifiziert, bei dem das mobile Gerät abonniert ist, den unterschiedlichen Wert angibt, zu speichern, und um eine Zuordnung zwischen einem lokalen Identifizierer der Funkverbindung mit einem mobilen Gerät und einem Kernnetz, das ganz oder teilweise aus einer permanenten Identität dieses mobilen Geräts abgeleitet wird, deren Feld, das jenen der Betreiber identifiziert, bei dem das mobile Gerät abonniert ist, den unterschiedlichen Wert angibt, zu speichern.

15. Telekommunikationsnetz nach einem der Ansprüche 10 bis 12, **dadurch gekennzeichnet, dass** jedes Kernnetz Mittel enthält, um den Betriebsmittelidentifizierer in jede temporäre Identität aufzunehmen, die einem mobilen Kommunikationsgerät von einem Kernnetzknoten zugewiesen wird und zu diesem geschickt wird.

16. Verfahren für eine Zellentelekommunikation mittels Controller (47, 52) eines Funkzugriffsnetzes und **dadurch gekennzeichnet, dass** es enthält:
- wenigstens einem Diskriminierungsschritt (73, 94, 102), in dem ein Zugriffsnetz-Controller einen Wert auffängt, der von einem mobilen Gerät (59) ausgesendet wird, um sich zu identifizieren, das mobilen Geräts, das Kommunikationsdienste eines ersten Betreibers, der ein erstes Kernnetz steuert, oder eines zweiten Betreibers, der ein zweites Kernnetz steuert, verwenden darf wobei der Wert für das Kernnetz, das von dem Betreiber gesteuert wird, dessen mobiles Gerät die Kommunikationsdienste verwenden darf, verschieden ist,
- einen Leitungsschritt (79), in dem der Controller, der von dem mobilen Gerät eine an ein Kernnetz zu übertragende Nachricht empfangen hat, diese Nachricht in einer Batterie von Knoten des ersten und des zweiten Kernnetzes, mit denen der Controller verbunden ist, in Abhängigkeit von dem unterschiedlichen Wert zu einem Knoten des ersten Kernnetzes oder zu einem Knoten des zweiten Kernnetzes leitet.

17. Telekommunikationsverfahren nach Anspruch 16, **dadurch gekennzeichnet, dass** es enthält:
- einen Diskriminierungsschritt (73), in dem der Netz-Controller den Wert durch Lesen in einem Kopf der zu übertragenden Nachricht auffängt;
- einen Schritt (75), der aktiviert wird, wenn der Zugriffsnetz-Controller detektiert, dass der unterschiedliche Wert ein Bild einer temporären Identität ist, und in dem der Controller aus dem Bild der temporären Identität einen Betriebsmittelidentifizierer extrahiert, um eine Adresse des Kernnetzknotens zu finden, zu dem die Nachricht im Leitungsschritt (79) geleitet werden soll;
- einen Schritt (77), der aktiviert wird, wenn der Zugriffsnetz-Controller detektiert, dass der unterschiedliche Wert ein Bild einer permanenten Identität ist, und in dem der Controller einen Wertebereich verwendet, in dem das Bild der permanenten Identität enthalten ist, um eine Adresse des Kernnetzknotens zu finden, zu dem die Nachricht im Leitungsschritt (79) geleitet werden soll.

18. Telekommunikationsverfahren nach Anspruch 16, **dadurch gekennzeichnet, dass** es enthält:
- einen Diskriminierungsschritt (94), in dem der Zugriffsnetz-Controller den unterschiedlichen Wert durch Lesen in einem Körper der zum Kernnetz zu übertragenden Nachricht auffängt;
- einen Schritt (98), der aktiviert wird, wenn der Zugriffsnetz-Controller detektiert, dass der unterschiedliche Wert ein Bild einer permanenten Identität ist, und in dem der Controller einen Landescode und einen Betreiber-Code verwendet, die in einem Bild einer permanenten Identität enthalten sind, um eine Adresse des Kernnetzknotens zu finden, zu dem die Nachricht im Leitungsschritt (79) geleitet werden soll.

19. Telekommunikationsverfahren nach Anspruch 17, **dadurch gekennzeichnet, dass** der Betriebsmittelidentifizierer ermöglicht, eine Knotenadresse desselben Kernnetzes in jeder Batterie zu finden.

20. Telekommunikationsverfahren nach Anspruch 16, **dadurch gekennzeichnet, dass** es einen Diskriminierungsschritt (102) enthält, in dem der Zugriffsnetz-Controller den unterschiedlichen Wert durch Lesen einer permanenten Identität in einer Anforderungsnachricht, die von dem mobilen Gerät ausgesendet wird, um eine Funkverbindung herzustellen, auffängt, die Funkverbindung herstellt und der hergestellten Funkverbindung die gesamte permanente Identität oder einen Teil hiervon zuordnet, die wenigstens das Feld enthält, das jenen der Betreiber identifiziert, bei dem das mobile Gerät abonniert ist, oder ein Kernnetz zuordnet, das unter Verwendung eines signifikanten Teils der permanenten Identität bestimmt wird, derart, dass entweder aus der gesamten permanenten Identität oder aus einem Teil hiervon, der die Funkverbindung zugeordnet ist, oder aus dem Kernnetz, dem die Funkverbindung zugeordnet ist, eine Adresse des Kernnetzknotens abgeleitet wird, zu dem die Nachricht im Leitungsschritt (79) geleitet werden soll.

21. Zugriffsnetz-Controller (47, 52), der für ein Funkzugriffsnetz bestimmt ist, um den Zugriff eines mobilen Geräts (59), das Kommunikationsdienste eines ersten Betreibers, der ein erstes Kernnetz steuert, oder eines zweiten Betreibers, der ein zweites Kernnetz steuert, verwenden darf, **dadurch gekennzeichnet, dass** er enthält:
- wenigstens ein Diskriminierungsmittel, um einen Wert aufzufangen, der von dem mobilen Gerät ausgesendet wird, um sich zu identifizieren, wobei der Wert für das Kernnetz, das von dem Betreiber gesteuert wird, dessen mobiles Gerät die Kommunikationsdienste verwenden darf, verschieden ist,
- ein Leitungsmittel, um dann, wenn der Controller von dem mobilen Gerät eine zu einem Kernnetz zu übertragende Nachricht empfangen hat, diese Nachricht in einer Batterie von Knoten des ersten und des zweiten Kernnetzes, mit denen der Controller verbunden ist, in Abhängigkeit von dem unterschiedlichen Wert zu einem Knoten des ersten Kernnetzes oder zu einem Knoten des zweiten Kernnetzes zu leiten.
